(19) Europäisches Patentamt
European Patent Office
Office européen des brevets

(11) **EP 4 216 394 A1**

(12) **EUROPEAN PATENT APPLICATION**
published in accordance with Art. 153(4) EPC

(43) Date of publication:
**26.07.2023 Bulletin 2023/30**

(21) Application number: **20959118.9**

(22) Date of filing: **29.10.2020**

(51) International Patent Classification (IPC):
**H02J 3/38** (2006.01)

(52) Cooperative Patent Classification (CPC):
**H02J 3/38;** Y02E 10/56

(86) International application number:
**PCT/CN2020/124781**

(87) International publication number:
**WO 2022/087955 (05.05.2022 Gazette 2022/18)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Digital Power Technologies
Co., Ltd.
Shenzhen, Guangdong 518043 (CN)**

(72) Inventors:
• **XU, Zhiwu
  Shenzhen, Guangdong 518129 (CN)**
• **GU, Guilei
  Shenzhen, Guangdong 518129 (CN)**
• **ZHONG, Shaohui
  Shenzhen, Guangdong 518129 (CN)**

(74) Representative: **Huawei European IPR
Huawei Technologies Duesseldorf GmbH
Riesstraße 25
80992 München (DE)**

(54) **BUS VOLTAGE CONTROL METHOD AND APPARATUS FOR PHOTOVOLTAIC SYSTEM**

(57) This application relates to a method for controlling a busbar voltage of a photovoltaic system. The photovoltaic system includes a DC/DC converter and a DC/AC converter. The DC/DC converter, the DC/AC converter, and an energy storage battery are connected via a busbar. The DC/DC converter is connected to a photovoltaic direct current source and performs maximum power point tracking on an input power from the photovoltaic direct current source. A load connected to the DC/AC converter has a load power. The energy storage battery has a maximum charging power and a maximum discharging power. The method includes: controlling the busbar voltage to be in a plurality of different discontinuous voltage intervals based on different results of comparison between a maximum photovoltaic power and the load power, the maximum charging power, and the maximum discharging power. The plurality of different discontinuous voltage intervals correspond to different operating states of the inverter.

FIG. 1

**Description**

**TECHNICAL FIELD**

This application relates to power electronics technologies, and specifically, to a method and an apparatus for controlling a busbar voltage of a photovoltaic system.

**BACKGROUND**

New energy technologies, such as photovoltaic power generation, have developed rapidly. Photovoltaic power generation refers to converting solar radiation energy into electrical energy by using the photovoltaic effect of semiconductor materials. For example, a direct current is generated upon exposure of a photovoltaic module to light. The photovoltaic module is a core part of a photovoltaic power generation system. A number of solar cells are connected in series and parallel and then are packaged into a single module to convert solar energy into electrical energy. A plurality of photovoltaic modules are connected in series and parallel to form a solar photovoltaic array.

In the photovoltaic power generation system, the solar photovoltaic array supplies energy to a load. Due to light and environmental factors, the energy provided by the solar photovoltaic array fluctuates, and a maximum power point tracking (Maximum Power Point Tracking, MPPT) technology may be used to track an output voltage and current to obtain a maximum photovoltaic power. In addition, when there is excess energy provided by the solar photovoltaic array, the excess energy may be stored or may be sent to an alternating current grid. When there is a lack of solar radiation, or energy provided by the solar photovoltaic array is insufficient, an energy storage device provides energy to the load of the system. Therefore, the photovoltaic power generation system needs to control a charging/discharging power of the energy storage device to match changes in the load.

In the conventional technology, the charging/discharging power of the energy storage device is calculated based on a busbar voltage, and there is a linear relationship between the busbar voltage and the charging power, and between the busbar voltage and the discharging power. To maximize charging/discharging efficiency, the busbar voltage needs to be gradually adjusted to a specified range because of the fact that a busbar capacitor of an inverter usually has a large value. However, this results in a wide adjustment range of the busbar voltage and a slow dynamic response. As a result, conversion efficiency of the inverter is not high, which reduces system revenue, and additionally it is not conducive to rapid adjustment of the busbar voltage to control the charging/discharging power to match the changes in the load.

**SUMMARY**

An objective of this application is to provide a method for controlling a busbar voltage of a photovoltaic system. The photovoltaic system includes a DC/DC converter and a DC/AC converter. The DC/DC converter, the DC/AC converter, and an energy storage battery are connected via a busbar, the DC/DC converter is connected to a photovoltaic direct current source and performs maximum power point tracking MPPT on an input power from the photovoltaic direct current source, a load connected to the DC/AC converter has a load power, and the energy storage battery has a maximum charging power and a maximum discharging power. The method includes: controlling the busbar voltage to be in a plurality of different discontinuous voltage intervals based on different results of comparison between a maximum photovoltaic power and the load power, the maximum charging power, and the maximum discharging power, where the plurality of different discontinuous voltage intervals correspond to different operating states of the inverter. In this way, the busbar voltage is controlled to be in the plurality of different discontinuous voltage intervals to implement switching of the operating states of the inverter, facilitating stability and flexibility. In addition, the busbar voltage is controlled based on the different results of comparison between the maximum photovoltaic power and the load power, the maximum charging power, and the maximum discharging power, which implements fast power balancing in a scenario of an abrupt change in the load and a fast response to changes in a charging/discharging power of the energy storage battery, thereby improving conversion efficiency of the inverter, narrowing an operating range of the inverter, and further improving efficiency of the inverter and increasing system revenue.

According to a first aspect, an embodiment of this application provides a method for controlling a busbar voltage of a photovoltaic system, the photovoltaic system including a DC/DC converter and a DC/AC converter, where the DC/DC converter, the DC/AC converter, and an energy storage battery are connected via a busbar, the DC/DC converter is connected to a photovoltaic direct current source and performs maximum power point tracking MPPT on an input power from the photovoltaic direct current source, a load connected to the DC/AC converter has a load power, and the energy storage battery has a maximum charging power and a maximum discharging power. The method includes: controlling the busbar voltage to be in a plurality of different discontinuous voltage intervals based on different results of comparison between a maximum photovoltaic power and the load power, the maximum charging power, and the maximum discharging power, where the plurality of different discontinuous voltage intervals correspond to different operating states of the inverter.

According to the technical solution described in the first aspect, the busbar voltage is controlled to be in the plurality of different discontinuous voltage intervals to implement switching of the operating states of the inverter, facilitating stability and flexibility. In addition, the busbar voltage is controlled based on the different results of comparison between the maximum photovoltaic power and the load power, the maximum charging power, and the maximum discharging power, which implements fast power balancing in a scenario of an abrupt change in the load and a fast response to changes in a charging/discharging power of the energy storage battery, thereby improving conversion efficiency of the inverter, narrowing an operating range of the inverter, and further improving efficiency of the inverter and increasing system revenue.

According to the first aspect, in a possible implementation, controlling the busbar voltage to be in the plurality of different discontinuous voltage intervals based on the different results of comparison between the maximum photovoltaic power and the load power, the maximum charging power, and the maximum discharging power includes: controlling the busbar voltage to operate in a first voltage interval when the maximum photovoltaic power is greater than the load power, and the maximum photovoltaic power minus the load power is greater than the maximum charging power, where the first voltage interval corresponds to a reference value of a busbar voltage on a BST side, and when an operating state of the inverter is a state corresponding to the reference value of the busbar voltage on the BST side, the energy storage battery is in a charging state, a charging power of the energy storage battery reaches the maximum charging power, and a photovoltaic output power of the photovoltaic direct current source is less than the maximum photovoltaic power, where the photovoltaic output power of the photovoltaic direct current source is equal to a sum of the load power and the maximum charging power.

In this way, the busbar voltage is controlled to be in a specific voltage interval, so as to switch the inverter to a corresponding operating state.

According to the first aspect, in a possible implementation, controlling the busbar voltage to be in the plurality of different discontinuous voltage intervals based on the different results of comparison between the maximum photovoltaic power and the load power, the maximum charging power, and the maximum discharging power includes: controlling the busbar voltage to operate in a second voltage interval when the maximum photovoltaic power is greater than the load power, and the maximum photovoltaic power minus the load power is less than the maximum charging power, where the second voltage interval corresponds to a reference value of a busbar voltage for charging of the energy storage battery, and when an operating state of the inverter is a state corresponding to the reference value of the busbar voltage for charging of the energy storage battery, the energy storage battery is in a charging state, a charging power of the energy storage battery is less than the maximum charging power, and a photovoltaic output power provided by the photovoltaic direct current source reaches the maximum photovoltaic power, where the charging power of the energy storage battery is equal to the maximum photovoltaic power minus the load power.

In this way, the busbar voltage is controlled to be in a specific voltage interval, so as to switch the inverter to a corresponding operating state.

According to the first aspect, in a possible implementation, controlling the busbar voltage to be in the plurality of different discontinuous voltage intervals based on the different results of comparison between the maximum photovoltaic power and the load power, the maximum charging power, and the maximum discharging power includes: controlling the busbar voltage to operate in a third voltage interval when the maximum photovoltaic power is less than the load power, and the maximum photovoltaic power minus the load power is less than the maximum discharging power, where the third voltage interval corresponds to a reference value of a busbar voltage on an INV side, and when an operating state of the inverter is a state corresponding to the reference value of the busbar voltage on the INV side, the energy storage battery is in a discharging state, a discharging power of the energy storage battery reaches the maximum discharging power, a photovoltaic output power provided by the photovoltaic direct current source reaches the maximum photovoltaic power, and the load obtains a compensation power from an alternating current grid, where the compensation power is equal to the load power minus the maximum photovoltaic power plus the maximum discharging power.

In this way, the busbar voltage is controlled to be in a specific voltage interval, so as to switch the inverter to a corresponding operating state.

According to the first aspect, in a possible implementation, controlling the busbar voltage to be in the plurality of different discontinuous voltage intervals based on the different results of comparison between the maximum photovoltaic power and the load power, the maximum charging power, and the maximum discharging power includes: controlling the busbar voltage to operate in a fourth voltage interval when the maximum photovoltaic power is less than the load power, and the maximum photovoltaic power minus the load power is greater than the maximum discharging power, where the fourth voltage interval corresponds to a reference value of a busbar voltage for discharging of the energy storage battery, and when an operating state of the inverter is a state corresponding to the reference value of the busbar voltage for discharging of the energy storage battery, the energy storage battery is in a discharging state, a discharging power of the energy storage battery is greater than the maximum discharging power, and a photovoltaic output power provided by the photovoltaic direct current source reaches the maximum photovoltaic power, where the discharging power of the energy storage battery is equal to the maximum photovoltaic power minus the load power.

In this way, the busbar voltage is controlled to be in a specific voltage interval, so as to switch the inverter to a corresponding operating state.

According to the first aspect, in a possible implementation, controlling the busbar voltage to be in the plurality of different discontinuous voltage intervals based on the different results of comparison between the maximum photovoltaic power and the load power, the maximum charging power, and the maximum discharging power includes: controlling the busbar voltage to operate in a first voltage interval when the maximum photovoltaic power is greater than the load power, and the maximum photovoltaic power minus the load power is greater than the maximum charging power, where the first voltage interval corresponds to a reference value of a busbar voltage on a BST side, controlling the busbar voltage to operate in a second voltage interval when the maximum photovoltaic power is greater than the load power, and the maximum photovoltaic power minus the load power is less than the maximum charging power, where the second voltage interval corresponds to a reference value of a busbar voltage for charging of the energy storage battery, controlling the busbar voltage to operate in a third voltage interval when the maximum photovoltaic power is less than the load power, and the maximum photovoltaic power minus the load power is less than the maximum discharging power, where the third voltage interval corresponds to a reference value of a busbar voltage on an INV side, or controlling the busbar voltage to operate in a fourth voltage interval when the maximum photovoltaic power is less than the load power, and the maximum photovoltaic power minus the load power is greater than the maximum discharging power, where the fourth voltage interval corresponds to a reference value of a busbar voltage for discharging of the energy storage battery, where the reference value of the busbar voltage on the BST side is greater than the reference value of the busbar voltage for charging of the energy storage battery, the reference value of the busbar voltage for charging of the energy storage battery is greater than the reference value of the busbar voltage for discharging of the energy storage battery, and the reference value of the busbar voltage for discharging of the energy storage battery is greater than the reference value of the busbar voltage on the INV side.

In this way, the busbar voltage is controlled to be in the different voltage intervals based on the different results of comparison between the maximum photovoltaic power and the load power, the maximum charging power, and the maximum discharging power, so as to switch the inverter to a corresponding operating state.

According to the first aspect, in a possible implementation, the method further includes: generating a loop control instruction for the busbar voltage on the BST side based on a sampling value of the busbar voltage of the inverter and the reference value of the busbar voltage on the BST side, to control an output power of the inverter such that the busbar voltage is stabilized at the reference value of the busbar voltage on the BST side; generating a loop control instruction for the busbar voltage on the INV side based on the sampling value of the busbar voltage and the reference value of the busbar voltage on the INV side, to control the output power of the inverter such that the busbar voltage is stabilized at the reference value of the busbar voltage on the INV side; generating a loop control instruction for the busbar voltage for charging of the energy storage battery based on the sampling value of the busbar voltage and the reference value of the busbar voltage for charging of the energy storage battery, to control a charging power of the energy storage battery such that the busbar voltage is stabilized at the reference value of the busbar voltage for charging of the energy storage battery; and generating a loop control instruction for the busbar voltage for discharging of the energy storage battery based on the sampling value of the busbar voltage and the reference value of the busbar voltage for discharging of the energy storage battery, to control a discharging power of the energy storage battery such that the busbar voltage is stabilized at the reference value of the busbar voltage for discharging of the energy storage battery.

In this way, the corresponding loop control instructions are generated based on the sampling value of the busbar voltage and the voltage reference values.

According to the first aspect, in a possible implementation, the loop control instruction for the busbar voltage on the BST side, the loop control instruction for the busbar voltage on the INV side, the loop control instruction for the busbar voltage for charging of the energy storage battery, and the loop control instruction for the busbar voltage for discharging of the energy storage battery all use a PI controller.

In this way, the use of the PI controller facilitates improving conversion efficiency of the inverter, narrowing an operating range of the inverter, and further improving efficiency of the inverter and increasing system revenue.

According to the first aspect, in a possible implementation, controlling the busbar voltage to be in the plurality of different discontinuous voltage intervals based on the different results of comparison between the maximum photovoltaic power and the load power, the maximum charging power, and the maximum discharging power includes: controlling the busbar voltage to operate in a fifth voltage interval when the maximum photovoltaic power is less than the load power, and the maximum photovoltaic power minus the load power is greater than the maximum discharging power, or when the maximum photovoltaic power is greater than the load power, and the maximum photovoltaic power minus the load power is less than the maximum charging power, where the fifth voltage interval corresponds to a reference value of a busbar voltage for charging/discharging of the energy storage battery, and when an operating state of the inverter is a state corresponding to the reference value of the busbar voltage for charging/discharging of the energy storage battery, a photovoltaic output power provided by the photovoltaic direct current source reaches the maximum photovoltaic power, and the maximum photovoltaic power minus the load power is less than the maximum charging power and greater than the maximum discharging power.

In this way, the busbar voltage is controlled to be in the different voltage intervals based on the different results of comparison between the maximum photovoltaic power and the load power, the maximum charging power, and the maximum discharging power, so as to switch the inverter to a corresponding operating state.

According to the first aspect, in a possible implementation, controlling the busbar voltage to be in the plurality of different discontinuous voltage intervals based on the different results of comparison between the maximum photovoltaic power and the load power, the maximum charging power, and the maximum discharging power includes: controlling the busbar voltage to operate in a first voltage interval when the maximum photovoltaic power is greater than the load power, and the maximum photovoltaic power minus the load power is greater than the maximum charging power, where the first voltage interval corresponds to a reference value of a busbar voltage on a BST side, controlling the busbar voltage to operate in a third voltage interval when the maximum photovoltaic power is less than the load power, and the maximum photovoltaic power minus the load power is less than the maximum discharging power, where the third voltage interval corresponds to a reference value of a busbar voltage on an INV side, or controlling the busbar voltage to operate in a fifth voltage interval when the maximum photovoltaic power is less than the load power, and the maximum photovoltaic power minus the load power is greater than the maximum discharging power, or when the maximum photovoltaic power is greater than the load power, and the maximum photovoltaic power minus the load power is less than the maximum charging power, where the fifth voltage interval corresponds to a reference value of a busbar voltage for charging/discharging of the energy storage battery, and the reference value of the busbar voltage on the BST side is greater than the reference value of the busbar voltage for charging/discharging of the energy storage battery, and the reference value of the busbar voltage for charging/discharging of the energy storage battery is greater than the reference value of the busbar voltage on the INV side.

In this way, the busbar voltage is controlled to be in the different voltage intervals based on the different results of comparison between the maximum photovoltaic power and the load power, the maximum charging power, and the maximum discharging power, so as to switch the inverter to a corresponding operating state.

According to the first aspect, in a possible implementation, the method further includes: generating a loop control instruction for the busbar voltage on the BST side based on a sampling value of the busbar voltage of the inverter and the reference value of the busbar voltage on the BST side, to control an output power of the inverter such that the busbar voltage is stabilized at the reference value of the busbar voltage on the BST side; generating a loop control instruction for the busbar voltage on the INV side based on the sampling value of the busbar voltage and the reference value of the busbar voltage on the INV side, to control the output power of the inverter such that the busbar voltage is stabilized at the reference value of the busbar voltage on the INV side; and generating a loop control instruction for the busbar voltage for charging/discharging of the energy storage battery based on the sampling value of the busbar voltage and the reference value of the busbar voltage for charging/discharging of the energy storage battery, to control a charging/discharging power of the energy storage battery such that the busbar voltage is stabilized at the reference value of the busbar voltage for charging/discharging of the energy storage battery.

In this way, the corresponding loop control instructions are generated based on the sampling value of the busbar voltage and the voltage reference values.

According to the first aspect, in a possible implementation, the loop control instruction for the busbar voltage on the BST side, the loop control instruction for the busbar voltage on the INV side, and the loop control instruction for the busbar voltage for charging/discharging of the energy storage battery all use a PI controller.

In this way, the use of the PI controller facilitates improving conversion efficiency of the inverter, narrowing an operating range of the inverter, and further improving efficiency of the inverter and increasing system revenue.

According to the first aspect, in a possible implementation, the maximum charging power and the maximum discharging power are preset.

In this way, a configuration is adjusted as required by presetting the maximum charging power and the maximum discharging power.

According to a second aspect, an embodiment of this application provides a photovoltaic system. The photovoltaic system includes: a DC/DC converter; a DC/AC converter, where the DC/DC converter, the DC/AC converter, and an energy storage battery are connected via a busbar, the DC/DC converter is connected to a photovoltaic direct current source and performs maximum power point tracking MPPT on an input power from the photovoltaic direct current source, a load connected to the DC/AC converter has a load power, and the energy storage battery has a maximum charging power and a maximum discharging power; and a busbar voltage controller. The busbar voltage controller is configured to: control the busbar voltage to be in a plurality of different discontinuous voltage intervals based on different results of comparison between a maximum photovoltaic power and the load power, the maximum charging power, and the maximum discharging power, where the plurality of different discontinuous voltage intervals correspond to different operating states of the inverter.

According to the technical solution described in the second aspect, the busbar voltage is controlled to be in the plurality of different discontinuous voltage intervals to implement switching of the operating states of the inverter, facilitating stability and flexibility. In addition, the busbar voltage is controlled based on the different results of comparison between the maximum photovoltaic power and the load power, the maximum charging power, and the maximum discharging power, which implements fast power balancing in a scenario of an abrupt change in the load and a fast response to changes in a charging/discharging power of the energy storage battery, thereby improving conversion efficiency of the inverter, narrowing an operating range of the inverter, and further improving efficiency of the inverter and increasing system revenue.

According to the second aspect, in a possible implementation, controlling the busbar voltage to be in the plurality of different discontinuous voltage intervals based on the different results of comparison between the maximum photovoltaic power and the load power, the maximum charging power, and the maximum discharging power includes: controlling the busbar voltage to operate in a first voltage interval when the maximum photovoltaic power is greater than the load power, and the maximum photovoltaic power minus the load power is greater than the maximum charging power, where the first voltage interval corresponds to a reference value of a busbar voltage on a BST side, and when an operating state of the inverter is a state corresponding to the reference value of the busbar voltage on the BST side, the energy storage battery is in a charging state, a charging power of the energy storage battery reaches the maximum charging power, and a photovoltaic output power of the photovoltaic direct current source is less than the maximum photovoltaic power, where the photovoltaic output power of the photovoltaic direct current source is equal to a sum of the load power and the maximum charging power.

In this way, the busbar voltage is controlled to be in a specific voltage interval, so as to switch the inverter to a corresponding operating state.

According to the second aspect, in a possible implementation, controlling the busbar voltage to be in the plurality of different discontinuous voltage intervals based on the different results of comparison between the maximum photovoltaic power and the load power, the maximum charging power, and the maximum discharging power includes: controlling the busbar voltage to operate in a second voltage interval when the maximum photovoltaic power is greater than the load power, and the maximum photovoltaic power minus the load power is less than the maximum charging power, where the second voltage interval corresponds to a reference value of a busbar voltage for charging of the energy storage battery, and when an operating state of the inverter is a state corresponding to the reference value of the busbar voltage for charging of the energy storage battery, the energy storage battery is in a charging state, a charging power of the energy storage battery is less than the maximum charging power, and a photovoltaic output power provided by the photovoltaic direct current source reaches the maximum photovoltaic power, where the charging power of the energy storage battery is equal to the maximum photovoltaic power minus the load power.

In this way, the busbar voltage is controlled to be in a specific voltage interval, so as to switch the inverter to a corresponding operating state.

According to the second aspect, in a possible implementation, controlling the busbar voltage to be in the plurality of different discontinuous voltage intervals based on the different results of comparison between the maximum photovoltaic power and the load power, the maximum charging power, and the maximum discharging power includes: controlling the busbar voltage to operate in a third voltage interval when the maximum photovoltaic power is less than the load power, and the maximum photovoltaic power minus the load power is less than the maximum discharging power, where the third voltage interval corresponds to a reference value of a busbar voltage on an INV side, and when an operating state of the inverter is a state corresponding to the reference value of the busbar voltage on the INV side, the energy storage battery is in a discharging state, a discharging power of the energy storage battery reaches the maximum discharging power, a photovoltaic output power provided by the photovoltaic direct current source reaches the maximum photovoltaic power, and the load obtains a compensation power from an alternating current grid, where the compensation power is equal to the load power minus the maximum photovoltaic power plus the maximum discharging power.

In this way, the busbar voltage is controlled to be in a specific voltage interval, so as to switch the inverter to a corresponding operating state.

According to the second aspect, in a possible implementation, controlling the busbar voltage to be in the plurality of different discontinuous voltage intervals based on the different results of comparison between the maximum photovoltaic power and the load power, the maximum charging power, and the maximum discharging power includes: controlling the busbar voltage to operate in a fourth voltage interval when the maximum photovoltaic power is less than the load power, and the maximum photovoltaic power minus the load power is greater than the maximum discharging power, where the fourth voltage interval corresponds to a reference value of a busbar voltage for discharging of the energy storage battery, and when an operating state of the inverter is a state corresponding to the reference value of the busbar voltage for discharging of the energy storage battery, the energy storage battery is in a discharging state, a discharging power of the energy storage battery is greater than the maximum discharging power, and a photovoltaic output power provided by the photovoltaic direct current source reaches the maximum photovoltaic power, where the discharging power of the energy storage battery is equal to the maximum photovoltaic power minus the load power.

In this way, the busbar voltage is controlled to be in a specific voltage interval, so as to switch the inverter to a corresponding operating state.

According to the second aspect, in a possible implementation, controlling the busbar voltage to be in the plurality of different discontinuous voltage intervals based on the different results of comparison between the maximum photovoltaic power and the load power, the maximum charging power, and the maximum discharging power includes: controlling the busbar voltage to operate in a first voltage interval when the maximum photovoltaic power is greater than the load power, and the maximum photovoltaic power minus the load power is greater than the maximum charging power, where the first voltage interval corresponds to a reference value of a busbar voltage on a BST side, controlling the busbar voltage to operate in a second voltage interval when the maximum photovoltaic power is greater than the load power, and the maximum photovoltaic power minus the load power is less than the maximum charging power, where the second voltage interval corresponds to a reference value of a busbar voltage for charging of the energy storage battery, controlling the busbar voltage to operate in a third voltage interval when the maximum photovoltaic power is less than the load power, and the maximum photovoltaic power minus the load power is less than the maximum discharging power, where the third voltage interval corresponds to a reference value of a busbar voltage on an INV side, or controlling the busbar voltage to operate in a fourth voltage interval when the maximum photovoltaic power is less than the load power, and the maximum photovoltaic power minus the load power is greater than the maximum discharging power, where the fourth voltage interval corresponds to a reference value of a busbar voltage for discharging of the energy storage battery, where the reference value of the busbar voltage on the BST side is greater than the reference value of the busbar voltage for charging of the energy storage battery, the reference value of the busbar voltage for charging of the energy storage battery is greater than the reference value of the busbar voltage for discharging of the energy storage battery, and the reference value of the busbar voltage for discharging of the energy storage battery is greater than the reference value of the busbar voltage on the INV side.

In this way, the busbar voltage is controlled to be in the different voltage intervals based on the different results of comparison between the maximum photovoltaic power and the load power, the maximum charging power, and the maximum discharging power, so as to switch the inverter to a corresponding operating state.

According to the second aspect, in a possible implementation, the busbar voltage controller is further configured to: generate a loop control instruction for the busbar voltage on the B ST side based on a sampling value of the busbar voltage of the inverter and the reference value of the busbar voltage on the BST side, to control an output power of the inverter such that the busbar voltage is stabilized at the reference value of the busbar voltage on the BST side; generate a loop control instruction for the busbar voltage on the INV side based on the sampling value of the busbar voltage and the reference value of the busbar voltage on the INV side, to control the output power of the inverter such that the busbar voltage is stabilized at the reference value of the busbar voltage on the INV side; generate a loop control instruction for the busbar voltage for charging of the energy storage battery based on the sampling value of the busbar voltage and the reference value of the busbar voltage for charging of the energy storage battery, to control a charging power of the energy storage battery such that the busbar voltage is stabilized at the reference value of the busbar voltage for charging of the energy storage battery; and generate a loop control instruction for the busbar voltage for discharging of the energy storage battery based on the sampling value of the busbar voltage and the reference value of the busbar voltage for discharging of the energy storage battery, to control a discharging power of the energy storage battery such that the busbar voltage is stabilized at the reference value of the busbar voltage for discharging of the energy storage battery.

In this way, the corresponding loop control instructions are generated based on the sampling value of the busbar voltage and the voltage reference values.

According to the second aspect, in a possible implementation, the loop control instruction for the busbar voltage on the BST side, the loop control instruction for the busbar voltage on the INV side, the loop control instruction for the busbar voltage for charging of the energy storage battery, and the loop control instruction for the busbar voltage for discharging of the energy storage battery all use a PI controller.

In this way, the use of the PI controller facilitates improving conversion efficiency of the inverter, narrowing an operating range of the inverter, and further improving efficiency of the inverter and increasing system revenue.

According to the second aspect, in a possible implementation, controlling the busbar voltage to be in the plurality of different discontinuous voltage intervals based on the different results of comparison between the maximum photovoltaic power and the load power, the maximum charging power, and the maximum discharging power includes: controlling the busbar voltage to operate in a fifth voltage interval when the maximum photovoltaic power is less than the load power, and the maximum photovoltaic power minus the load power is greater than the maximum discharging power, or when the maximum photovoltaic power is greater than the load power, and the maximum photovoltaic power minus the load power is less than the maximum charging power, where the fifth voltage interval corresponds to a reference value of a busbar voltage for charging/discharging of the energy storage battery, and when an operating state of the inverter is a state corresponding to the reference value of the busbar voltage for charging/discharging of the energy storage battery, a photovoltaic output power provided by the photovoltaic direct current source reaches the maximum photovoltaic power, and the maximum photovoltaic power minus the load power is less than the maximum charging power and greater than the maximum discharging power.

In this way, the busbar voltage is controlled to be in the different voltage intervals based on the different results of comparison between the maximum photovoltaic power and the load power, the maximum charging power, and the maximum discharging power, so as to switch the inverter to a corresponding operating state.

According to the second aspect, in a possible implementation, controlling the busbar voltage to be in the plurality of different discontinuous voltage intervals based on the different results of comparison between the maximum photovoltaic power and the load power, the maximum charging power, and the maximum discharging power includes: controlling the busbar voltage to operate in a first voltage interval when the maximum photovoltaic power is greater than the load power, and the maximum photovoltaic power minus the load power is greater than the maximum charging power, where the first voltage interval corresponds to a reference value of a busbar voltage on a BST side, controlling the busbar voltage to operate in a third voltage interval when the maximum photovoltaic power is less than the load power, and the maximum photovoltaic power minus the load power is less than the maximum discharging power, where the third voltage interval corresponds to a reference value of a busbar voltage on an INV side, or controlling the busbar voltage to operate in a fifth voltage interval when the maximum photovoltaic power is less than the load power, and the maximum photovoltaic power minus the load power is greater than the maximum discharging power, or when the maximum photovoltaic power is greater than the load power, and the maximum photovoltaic power minus the load power is less than the maximum charging power, where the fifth voltage interval corresponds to a reference value of a busbar voltage for charging/discharging of the energy storage battery, and the reference value of the busbar voltage on the BST side is greater than the reference value of the busbar voltage for charging/discharging of the energy storage battery, and the reference value of the busbar voltage for charging/discharging of the energy storage battery is greater than the reference value of the busbar voltage on the INV side.

In this way, the busbar voltage is controlled to be in the different voltage intervals based on the different results of comparison between the maximum photovoltaic power and the load power, the maximum charging power, and the maximum discharging power, so as to switch the inverter to a corresponding operating state.

According to the second aspect, in a possible implementation, the busbar voltage controller is further configured to: generate a loop control instruction for the busbar voltage on the B ST side based on a sampling value of the busbar voltage of the inverter and the reference value of the busbar voltage on the BST side, to control an output power of the inverter such that the busbar voltage is stabilized at the reference value of the busbar voltage on the BST side; generate a loop control instruction for the busbar voltage on the INV side based on the sampling value of the busbar voltage and the reference value of the busbar voltage on the INV side, to control the output power of the inverter such that the busbar voltage is stabilized at the reference value of the busbar voltage on the INV side; and generate a loop control instruction for the busbar voltage for charging/discharging of the energy storage battery based on the sampling value of the busbar voltage and the reference value of the busbar voltage for charging/discharging of the energy storage battery, to control a charging/discharging power of the energy storage battery such that the busbar voltage is stabilized at the reference value of the busbar voltage for charging/discharging of the energy storage battery.

In this way, the corresponding loop control instructions are generated based on the sampling value of the busbar voltage and the voltage reference values.

According to the second aspect, in a possible implementation, the loop control instruction for the busbar voltage on the BST side, the loop control instruction for the busbar voltage on the INV side, and the loop control instruction for the busbar voltage for charging/discharging of the energy storage battery all use a PI controller.

In this way, the use of the PI controller facilitates improving conversion efficiency of the inverter, narrowing an operating range of the inverter, and further improving efficiency of the inverter and increasing system revenue.

According to the second aspect, in a possible implementation, the maximum charging power and the maximum discharging power are preset.

In this way, a configuration is adjusted as required by presetting the maximum charging power and the maximum discharging power.

**BRIEF DESCRIPTION OF DRAWINGS**

To describe technical solutions in embodiments of this application or in the background, the following briefly describes the accompanying drawings for describing embodiments of this application or the background.

FIG. 1 is a block diagram of a structure of a photovoltaic power generation system including a busbar voltage controller of an inverter according to an embodiment of this application;

FIG. 2 is a schematic flowchart of a method for controlling a busbar voltage of an inverter according to a first implementation of an embodiment of this application;

FIG. 3 is a schematic diagram of controlling a busbar voltage of an inverter based on the method shown in FIG. 2 according to an embodiment of this application;

FIG. 4 is a schematic flowchart of a method for controlling a busbar voltage of an inverter according to a second implementation of an embodiment of this application; and

FIG. 5 is a schematic diagram of controlling a busbar voltage of an inverter based on the method shown in FIG. 4 according to an embodiment of this application.

## DETAILED DESCRIPTION OF EMBODIMENTS

An embodiment of this application provides a method for controlling a busbar voltage of a photovoltaic system. The photovoltaic system includes a DC/DC converter and a DC/AC converter. The DC/DC converter, the DC/AC converter, and an energy storage battery are connected via a busbar, the DC/DC converter is connected to a photovoltaic direct current source and performs maximum power point tracking MPPT on an input power from the photovoltaic direct current source, a load connected to the DC/AC converter has a load power, and the energy storage battery has a maximum charging power and a maximum discharging power. The method includes: controlling the busbar voltage to be in a plurality of different discontinuous voltage intervals based on different results of comparison between a maximum photovoltaic power and the load power, the maximum charging power, and the maximum discharging power, where the plurality of different discontinuous voltage intervals correspond to different operating states of the inverter. In this way, the busbar voltage is controlled to be in the plurality of different discontinuous voltage intervals to implement switching of the operating states of the inverter, facilitating stability and flexibility. In addition, the busbar voltage is controlled based on the different results of comparison between the maximum photovoltaic power and the load power, the maximum charging power, and the maximum discharging power, which implements fast power balancing in a scenario of an abrupt change in the load and a fast response to changes in a charging/discharging power of the energy storage battery, thereby improving conversion efficiency of the inverter, narrowing an operating range of the inverter, and further improving efficiency of the inverter and increasing system revenue.

This embodiment of this application may be applied to the following application scenarios including, but not limited to, a photovoltaic inverter, a photovoltaic power generation system, and other application scenarios requiring implementation of fast balancing of the load power and a fast response to the energy storage battery.

This embodiment of this application may be adjusted and improved based on a specific application environment, which is not specifically limited herein.

To make persons skilled in the art understand the solutions in this application better, the following describes embodiments of this application with reference to the accompanying drawings in embodiments of this application.

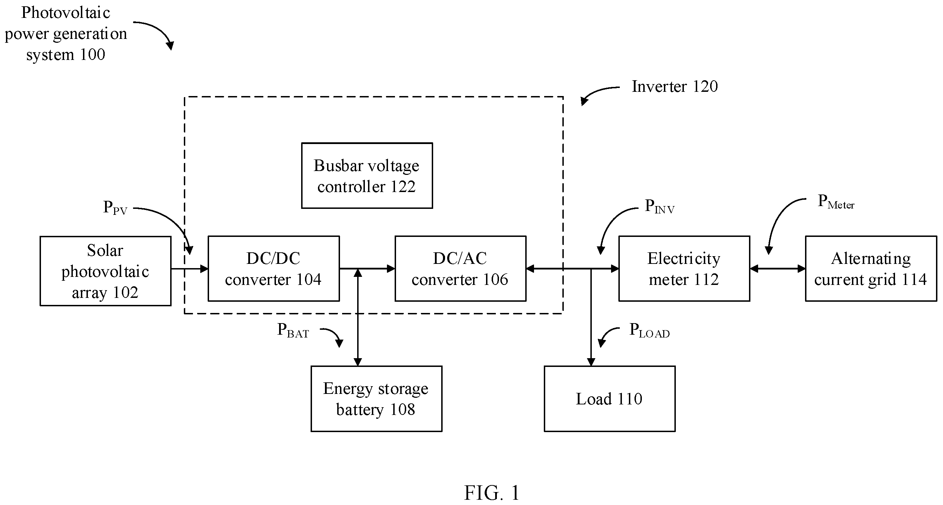

Refer to FIG. 1. FIG. 1 is a block diagram of a structure of a photovoltaic power generation system including a busbar voltage controller of an inverter according to an embodiment of this application. As shown in FIG. 1, the photovoltaic power generation system 100 includes a solar photovoltaic array 102, an inverter 120, an energy storage battery 108, a load 110, and an electricity meter 112. The solar photovoltaic array 102 is composed of a plurality of photovoltaic modules connected in series and parallel. Each photovoltaic module converts solar radiation energy into direct current according to the effect of photovoltaic power generation. The inverter 120 includes a DC/DC converter 104 and a DC/AC converter 106. The DC/DC converter 104 is located on a BST side of the inverter 120, that is, corresponds to a direct current-to-direct current conversion part of the inverter 120. The DC/AC converter 106 is located on an INV side of the inverter 120, that is, corresponds to a direct current-to-alternating current conversion part of the inverter 120. It should be understood that the DC/DC converter 104 and the DC/AC converter 106 may be integrated into one device, or may be a plurality of separate devices. This application does not limit specific physical forms of the DC/DC converter and the DC/AC converter. To be specific, the inverter may be one device that internally includes at least one DC/DC converter and at least one DC/AC converter; or may be a plurality of devices, one of which is the DC/DC converter, and another is the DC/AC converter, where the at least one DC/DC converter and the at least one DC/AC converter together form the inverter. In the specific embodiments of this application, the inverter is composed of the DC/DC converter and the DC/AC converter. These may be adjusted and improved based on an actual situation, which is not specifically limited in this application. In some embodiments, the DC/DC converter 104 may absolutely serve as a photovoltaic power optimizer, and may be connected, as an independent optimizer product, between a photovoltaic direct current source (including photovoltaic direct current sources such as a photovoltaic panel and a photovoltaic array) and the inverter.

A direct current input side of the DC/DC converter 104 is connected to the solar photovoltaic array 102, to convert a direct current output from the solar photovoltaic array 102 into an appropriate direct current to meet operating requirements of the DC/AC converter 106. In addition, a maximum power point tracking MPPT control strategy is performed for the direct current provided by the solar photovoltaic array 102 to obtain a maximum photovoltaic power of the solar photovoltaic array 102, which is then output from a direct current output side of the DC/DC converter 104. The direct current output side of the DC/DC converter 104 is connected to a direct current input side of the DC/AC converter 106. The DC/AC converter 106 converts the received direct current into an alternating current, and then outputs the alternating current from an alternating current output side of the DC/AC converter 106. A coupling point between the direct current output side of the DC/DC converter 104 and the direct current input side of the DC/AC converter 106 is a busbar (hereinafter referred to as BUS). As an external energy storage device, the energy storage battery 108 may be connected to the busbar of the inverter 120. In other words, the energy storage battery 108 may be connected between the DC/DC converter 104 and the DC/AC converter 106. The inverter 120 outputs electrical energy to the load 110, and is connected to an alternating current grid 114 via the electricity meter 112. The load 110 may be powered by the inverter 120, or may be powered by the alternating current grid 114, or may be powered by both the inverter 120 and the alternating current grid 114. The electricity meter 112 is configured to measure a power obtained from the alternating current grid 114. When the photovoltaic power generation system 100 is configured to be on-grid at zero power, it indicates that the photovoltaic power generation system 100 does not feed back a power to the alternating current grid 114, and a reading of the electricity meter 112 is greater than or equal to zero.

Still refer to FIG. 1. The DC/DC converter 104, the DC/AC converter 106, and the energy storage battery 108 are coupled to the busbar of the inverter 120. It should be understood that a direct current busbar is positive and negative terminal wirings between the DC/DC converter 104 and the DC/AC converter 106, a direct current busbar capacitor is a capacitor between direct current busbars, and a direct current busbar voltage is a voltage between the positive and negative terminal wirings of the direct current busbar, that is, a voltage applied to two terminals of the direct current busbar capacitor. Connecting lines shown in FIG. 1 are used to indicate a flow direction of electrical energy. Descriptions of the notations are as follows: $P_{PV}$ denotes a photovoltaic output power, that is, an actual output power of the solar photovoltaic array 102. $P_{PV\_MPP}$ (not shown) denotes a maximum photovoltaic power, which is also a maximum power that can be output from the solar photovoltaic array 102 based on the MPPT control strategy, that is, a maximum MPPT-based photovoltaic power obtained by the DC/DC converter 104. $P_{BAT}$ denotes a charging/discharging power of the energy storage battery 108, which may be denoted by values with positive and negative signs, where the positive sign indicates charging, and the negative sign indicates discharging. $P_{INV}$ denotes an output power of the inverter 120, which is also a power of an alternating current output provided by the DC/AC converter 106. $P_{LOAD}$ denotes a load power of the load 110. $P_{Meter}$ denotes a power that is obtained from the alternating current grid and that is measured by the electricity meter 112, which may be denoted by values with positive and negative signs, where the positive sign indicates drawing power from the alternating current grid, and the negative sign indicates feeding power to the alternating current grid. The inverter 120 receives the photovoltaic output power $P_{PV}$ from the solar photovoltaic array 102, and outputs the power $P_{INY}$. When the photovoltaic power generation system 100 is configured to be on-grid at zero power, the electricity meter power $P_{Meter}$ is greater than or equal to 0, and no power is fed to the grid. Based on a result of comparison between the maximum photovoltaic power $P_{PV\_MPP}$, the load power $P_{LOAD}$, and the maximum charging power and the maximum discharging power of the energy storage battery 108, a loop competitive strategy may be performed to achieve power matching. The inverter 120 further includes a busbar voltage controller 122 to achieve the loop competition strategy. The busbar voltage controller 122 may be disposed in the inverter 120 or may be disposed separately. The busbar voltage controller 122 is communicatively connected to the energy storage battery 108 to control the charging/discharging power of the energy storage battery 108, and has a necessary hardware structure to obtain a sampling value of the busbar voltage. It should be understood that the busbar voltage controller 122 has the basic structures of a processor and a memory to perform required detection and control functions and to store program code for the loop competitive strategy, or has circuits and components required to perform the control functions. The specific structure and function of the busbar voltage controller 122 may be set or improved based on a specific application scenario, which is not specifically limited herein.

Still refer to FIG. 1. Changes in the load cause changes in the load power $P_{LOAD}$, and changes in conditions such as solar radiation also cause changes in the photovoltaic output power $P_{PV}$. Therefore, the inverter 120 needs to control the charging/discharging power of the energy storage battery 108 based on power data of the electricity meter 112, so as to match these changes. The inverter 120 further includes the busbar voltage controller 122 to perform MPPT for the solar photovoltaic array to obtain the maximum photovoltaic input power $P_{PV\_MPP}$ and output the power $P_{INY}$. The busbar voltage controller 122 is further communicatively connected to the energy storage battery 108 to control the charging/discharging power $P_{BAT}$ of the energy storage battery 108. The busbar voltage controller 122 obtains the sampling value of the busbar voltage of the inverter 120, and performs the loop competitive strategy, so as to determine the control of the busbar voltage and perform energy management accordingly. It should be understood that the busbar voltage controller 122 has the architecture of a processor and a memory to perform required detection and control functions and to store program code for the loop competitive strategy, or has circuits and components required to perform the control functions. The busbar voltage controller 122 can obtain the sampling value of the busbar voltage and measure the output power $P_{INV}$ of the inverter 120 by using a suitable technical means in the conventional technology, which is not specifically limited herein.

In some example embodiments, the solar photovoltaic array 102 may be any direct current source that can obtain a maximum power based on the MPPT control strategy. These can be adjusted and improved based on a specific application environment, which is not specifically limited herein.

In some example embodiments, the DC/DC converter 104 implements MPPT control on a direct current input provided by the solar photovoltaic array 102 by using a constant voltage method, a perturb and observe method, or an incremental conductance method, so as to obtain the maximum photovoltaic power. In some example embodiments, the DC/DC converter 104 may use a pulse-width modulation manner, may include necessary elements such as a control chip, an inductor, and a capacitor, and may be a boost type, a buck type, or a boost-buck type. These can be adjusted and improved based on a specific application environment, which is not specifically limited herein.

In some example embodiments, the DC/AC converter 106 may be a single-phase inverter, or a three-phase inverter, or may be another type of inverter circuit capable of converting a direct current to an alternating current. These can be adjusted and improved based on a specific application environment, which is not specifically limited herein.

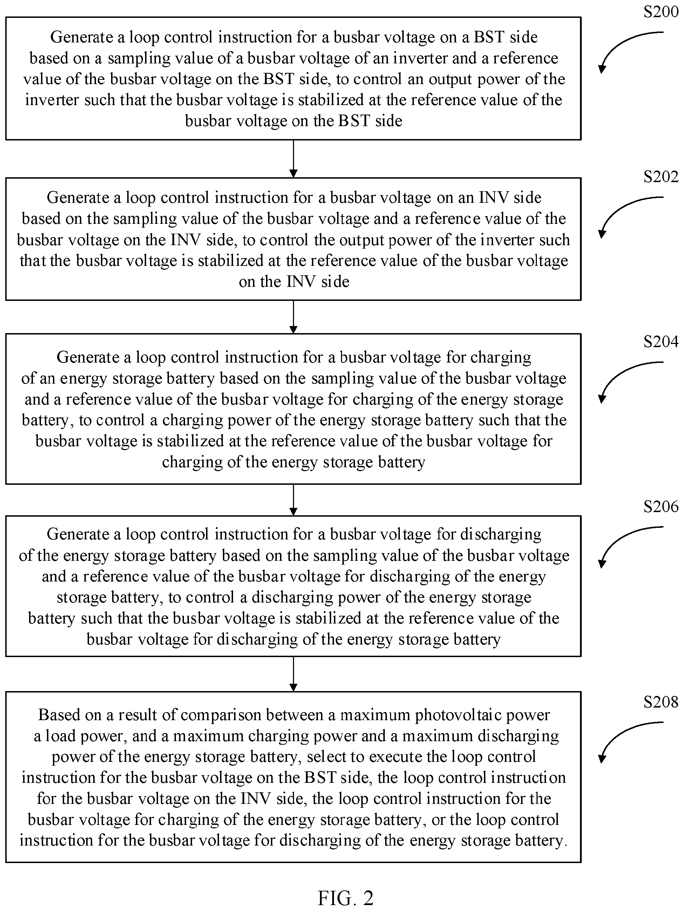

Refer to FIG. 2. FIG. 2 is a schematic flowchart of a method for controlling a busbar voltage of an inverter according to a first implementation of an embodiment of this application. As shown in FIG. 2, the method for controlling includes the following steps.

Step S200: Generate a loop control instruction for a busbar voltage on a BST side based on a sampling value of the busbar voltage of the inverter and a reference value of the busbar voltage on the BST side, to control an output power of the inverter such that the busbar voltage is stabilized at the reference value of the busbar voltage on the BST side.

The inverter includes a DC/DC converter and a DC/AC converter. A direct current input side of the DC/AC converter is connected to a solar photovoltaic array, and a coupling point between a direct current output side of the DC/AC converter and a direct current input side of the DC/AC converter is a busbar. The direct current input side of the DC/AC converter is connected to the solar photovoltaic array, to convert a direct current output from the solar photovoltaic array into an appropriate direct current to meet operating requirements of the DC/AC converter. In addition, a maximum power point tracking MPPT control strategy is performed for the direct current provided by the solar photovoltaic array to obtain a maximum photovoltaic power of the solar photovoltaic array. As an external energy storage device, an energy storage battery may be connected to the busbar of the inverter. In other words, the energy storage battery may be connected between the DC/DC converter and the DC/AC converter. It should be understood that the solar photovoltaic array may be any direct current source that can obtain a maximum power based on the MPPT control strategy. These can be adjusted and improved based on a specific application environment, which is not specifically limited herein.

The loop control instruction for the busbar voltage on the BST side may be generated in the form of a proportional integral controller (Proportional Integral Controller, PI) and according to the following formulas (1) and (2).

$$P_{BST}(t) = K_P * e(t) + K_i * \int_0^t e(t) * dt \tag{1}$$

$$e(t) = U_{REF\_BST} - U_{BUS}(t) \tag{2}$$

t denotes time, $U_{REF\_BST}$ denotes the reference value of the busbar voltage on the BST side, $U_{BUS}(t)$ denotes the sampling value of the busbar voltage, e(t) denotes a difference between the reference value of the busbar voltage on the BST side and the sampling value of the busbar voltage, $P_{EST}(t)$ denotes the output power of the inverter under the loop control instruction for the busbar voltage on the BST side such that the busbar voltage is stabilized at the reference value $U_{REF\_BST}$ of the busbar voltage on the BST side, $K_p$ denotes a proportional adjustment factor, and $K_i$ denotes an integral adjustment factor. It should be understood that the busbar voltage being stabilized at the reference value of the busbar voltage on the BST side means that fluctuations, jitters, ripples, or a plurality of different voltage values of the busbar voltage are limited within a specific interval. There is a measurable difference between an upper limit or a lower limit of each interval and a lower limit or an upper limit of another interval, such that the intervals have clear definitions and limits. The busbar voltage may be sampled by directly detecting and measuring a voltage using a sampling resistor, or by using another suitable technical means. In addition, the use of the PI controller can make the busbar voltage stabilized at the reference value $U_{REF\_BST}$ of the busbar voltage on the BST side, which facilitates improving conversion efficiency of the inverter, narrowing an operating range of the inverter, and further improving efficiency of the inverter and increasing system revenue. It should be understood that in embodiments of this application, the controller is not necessarily a PI controller, and other controllers may also be used as required.

Step S202: Generate a loop control instruction for a busbar voltage on an INV side based on the sampling value of the busbar voltage and a reference value of the busbar voltage on the INV side, to control the output power of the inverter such that the busbar voltage is stabilized at the reference value of the busbar voltage on the INV side.

The loop control instruction for the busbar voltage on the INV side may be generated in the form of a PI controller and according to the following formulas (3) and (4).

$$P_{INV}(t) = K_P * e(t) + K_i * \int_0^t e(t) * dt \tag{3}$$

$$e(t) = U_{REF\_INV} - U_{BUS}(t) \tag{4}$$

t denotes time, $U_{REF\_INV}$ denotes the reference value of the busbar voltage on the INV side, $U_{BUS}(t)$ denotes the sampling value of the busbar voltage, e(t) denotes a difference between the reference value of the busbar voltage on the INV side and the sampling value of the busbar voltage, $P_{INV}(t)$ denotes the output power of the inverter under the loop control instruction for the busbar voltage on the INV side such that the busbar voltage is stabilized at the reference value $U_{REF\_INV}$ of the busbar voltage on the INV side, $K_p$ denotes a proportional adjustment factor, and $K_i$ denotes an integral adjustment factor. It should be understood that the busbar voltage being stabilized at the reference value $U_{REF\_INV}$ of the busbar voltage on the INV side means that jitters or ripples of the busbar voltage are less than a threshold, or that an average value or a root-mean-square value of the busbar voltage remains constant to some extent. The busbar voltage may be sampled by directly detecting and measuring a voltage using a sampling resistor, or by using another suitable technical means. In addition, the use of the PI controller can make the busbar voltage stabilized at the reference value $U_{REF\_INV}$ of the busbar voltage on the INV side, which facilitates improving conversion efficiency of the inverter, narrowing an operating range of the inverter, and further improving efficiency of the inverter and increasing system revenue. It should be understood that in embodiments of this application, the controller is not necessarily a PI controller, and other controllers may also be used as required.

Step S204: Generate a loop control instruction for a busbar voltage for charging of the energy storage battery based on the sampling value of the busbar voltage and a reference value of the busbar voltage for charging of the energy storage battery, to control a charging power of the energy storage battery such that the busbar voltage is stabilized at the reference value of the busbar voltage for charging of the energy storage battery.

The loop control instruction for the busbar voltage for charging of the energy storage battery may be generated in the form of a PI controller and according to the following formulas (5) and (6).

$$P_{BAT\_CHARGE}\ (t) = K_P * e\ (t)\ + K_i * \int_0^t e\ (t)\ * dt \tag{5}$$

$$e(t) = U_{REF\_CHARGE} - U_{BUS}(t) \tag{6}$$

t denotes time, $U_{REF\_CHARGE}$ denotes the reference value of the busbar voltage for charging of the energy storage battery, $U_{BUS}(t)$ denotes the sampling value of the busbar voltage, e(t) denotes a difference between the reference value of the busbar voltage for charging of the energy storage battery and the sampling value of the busbar voltage, $P_{BAT\_CHARGE}(t)$ denotes a charging power of the energy storage battery under the loop control instruction for the busbar voltage for charging of the energy storage battery such that the busbar voltage is stabilized at the reference value $U_{REF\_CHARGE}$ of the busbar voltage for charging of the energy storage battery, $K_p$ denotes a proportional adjustment factor, and $K_i$ denotes an integral adjustment factor. It should be understood that the busbar voltage being stabilized at the reference value $U_{REF\_CHARGE}$ of the busbar voltage for charging of the energy storage battery means that jitters or ripples of the busbar voltage are less than a threshold, or that an average value or a root-mean-square value of the busbar voltage remains constant to some extent. The busbar voltage may be sampled by directly detecting and measuring a voltage using a sampling resistor, or by using another suitable technical means. In addition, the use of the PI controller can make the busbar voltage stabilized at the reference value $U_{REF\_CHARGE}$ of the busbar voltage for charging of the energy storage battery, which facilitates improving conversion efficiency of the inverter, narrowing an operating range of the inverter, and further improving efficiency of the inverter and increasing system revenue. It should be understood that in embodiments of this application, the controller is not necessarily a PI controller, and other controllers may also be used as required.

Step S206: Generate a loop control instruction for a busbar voltage for discharging of the energy storage battery based on the sampling value of the busbar voltage and a reference value of the busbar voltage for discharging of the energy storage battery, to control a discharging power of the energy storage battery such that the busbar voltage is stabilized at the reference value of the busbar voltage for discharging of the energy storage battery.

The loop control instruction for the busbar voltage for discharging of the energy storage battery may be generated in the form of a PI controller and according to the following formulas (7) and (8).

$$P_{BAT\_DISCHARGE}\ (t) = K_P * e\ (t)\ + K_i * \int_0^t e\ (t)\ * dt \tag{7}$$

$$e(t) = U_{REF\_DISCHARGE} - U_{BUS}(t) \tag{8}$$

t denotes time, $U_{REF\_DISCHARGE}$ denotes the reference value of the busbar voltage for discharging of the energy storage battery, $U_{BUS}(t)$ denotes the sampling value of the busbar voltage, e(t) denotes a difference between the reference value of the busbar voltage for discharging of the energy storage battery and the sampling value of the busbar voltage, $P_{BAT\_DISCHARGE}(t)$ denotes a discharging power of the energy storage battery under the loop control instruction for the busbar voltage for discharging of the energy storage battery such that the busbar voltage is stabilized at the reference value $U_{REF\_DISCHARGE}$ of the busbar voltage for discharging of the energy storage battery, $K_p$ denotes a proportional adjustment factor, and $K_i$ denotes an integral adjustment factor. It should be understood that the busbar voltage being stabilized at the reference value $U_{REF\_DISCHARGE}$ of the busbar voltage for discharging of the energy storage battery means that jitters or ripples of the busbar voltage are less than a threshold, or that an average value or a root-mean-square value of the busbar voltage remains constant to some extent. The busbar voltage may be sampled by directly detecting and measuring a voltage using a sampling resistor, or by using another suitable technical means. In addition, the use of the PI controller can make the busbar voltage stabilized at the reference value $U_{REF\_DISCHARGE}$ of the busbar voltage for discharging of the energy storage battery, which facilitates improving conversion efficiency of the inverter, narrowing an operating range of the inverter, and further improving efficiency of the inverter and increasing system revenue. It should be understood that in embodiments of this application, the controller is not necessarily a PI controller, and other controllers may also be used as required.

Step S208: Based on a result of comparison between a maximum photovoltaic power, a load power, and a maximum charging power and a maximum discharging power of the energy storage battery, select to execute the loop control instruction for the busbar voltage on the BST side, the loop control instruction for the busbar voltage on the INV side, the loop control instruction for the busbar voltage for charging of the energy storage battery, or the loop control instruction for the busbar voltage for discharging of the energy storage battery.

The maximum charging power of the energy storage battery is used to indicate a maximum value of the charging power of the energy storage battery when the energy storage battery is in a charging state, and the maximum discharging power of the energy storage battery is used to indicate a maximum value of the discharging power of the energy storage battery when the energy storage battery is in a discharging state. The maximum charging power and the maximum discharging power are preset, for example, preset based on an application scenario of the inverter, or preset based on a design limit or factory setting of the energy storage battery. The loop competitive strategy in step S208 may be implemented by a controller or a control circuit of the inverter. The loop control instructions mentioned above may also be generated by the controller. In this way, the control of the busbar voltage is determined based on a result of loop competition, and corresponding energy management is implemented. For example, an output power of the inverter or a charging/discharging power of the energy storage battery is controlled based on the result of the loop competition, and changes in the load power caused by an abrupt change in the load are taken into account. Therefore, fast power balancing in a scenario of an abrupt change in the load can be implemented. In addition, compared with a change in the busbar voltage and a limited response speed of the busbar capacitor, the loop competitive strategy directly controls a related power and stabilizes the busbar voltage at a reference voltage value based on a result of the loop competition, and therefore implements a fast response to changes in a charging/discharging power of the energy storage battery, thereby improving conversion efficiency of the inverter, narrowing an operating range of the inverter, and further improving the efficiency of the inverter and increasing system revenue.

Specifically, in step S208, the loop competitive strategy may be represented by making a series of determinations based on the maximum photovoltaic power, the load power, the maximum charging power, and the maximum discharging power to select the loop control instruction to be executed:

selecting to execute the loop control instruction for the busbar voltage on the BST side when the maximum photovoltaic power is greater than the load power, and the maximum photovoltaic power minus the load power is greater than the maximum charging power of the energy storage battery;
selecting to execute the loop control instruction for the busbar voltage for charging of the energy storage battery when the maximum photovoltaic power is greater than the load power, and the maximum photovoltaic power minus the load power is less than the maximum charging power of the energy storage battery;
selecting to execute the loop control instruction for the busbar voltage on the INV side when the maximum photovoltaic power is less than the load power, and the maximum photovoltaic power minus the load power is less than the maximum discharging power of the energy storage battery; and
selecting to execute the loop control instruction for the busbar voltage for discharging of the energy storage battery when the maximum photovoltaic power is less than the load power, and the maximum photovoltaic power minus the load power is greater than the maximum discharging power of the energy storage battery.

In step S208, when the loop control instruction for the busbar voltage on the BST side is selected to be executed, the energy storage battery is in a charging state, the charging power of the energy storage battery reaches the maximum charging power, and the photovoltaic output power is less than the maximum photovoltaic power, where the photovoltaic output power is equal to a sum of the load power and the maximum charging power of the energy storage battery. With reference to step S200 and step S208, the photovoltaic output power is calculated according to the following formulas (9) and (10).

$$P_{PV} = P_{BAT\_CHARGE\_MAX} + P_{LOAD} \tag{9}$$

$$P_{PV} < P_{PV\_MPP} \tag{10}$$

$P_{LOAD}$ denotes the load power, $P_{BAT\_CHARGE\,MAX}$ denotes the maximum charging power, $P_{PV\_MPP}$ denotes the maximum photovoltaic power, $P_{PV}$ denotes the photovoltaic output power under the loop control instruction for the busbar voltage on the BST side. In this way, when the maximum photovoltaic power is still excess after meeting power supply for the load and the maximum charging power of the energy storage battery, and the system is required to be on-grid at zero power, that is, excess energy is not allowed to be fed into an alternating current grid, an output power of the direct current source may be less than the maximum photovoltaic power, and only a load power required for power supply for the load and the maximum charging power of the energy storage battery are met, thereby implementing fast power balancing and improving system efficiency.

In step S208, when the loop control instruction for the busbar voltage on the INV side is selected to be executed, the energy storage battery is in a discharging state, the discharging power of the energy storage battery reaches the maximum discharging power, the photovoltaic output power reaches the maximum photovoltaic power, and the inverter obtains a compensation power from a grid connected to the inverter, where the compensation power is equal to the load power minus the maximum photovoltaic power plus the maximum discharging power. With reference to step S202 and step S208, the compensation power is calculated according to the following formulas (11) and (12).

$$P_{Meter} = P_{LOAD} - P_{PV} + P_{BAT\_DISCHARGE\_MAX} \tag{11}$$

$$P_{PV} = P_{PV\_MPP} \tag{12}$$

$P_{Meter}$ denotes the compensation power, $P_{LOAD}$ denotes the load power, $P_{PV\_MPP}$ denotes the maximum photovoltaic power, $P_{PV}$ denotes the photovoltaic output power, and $P_{BAT\_DISCHARGE\_MAX}$ denotes the maximum discharging power. In this way, when a sum of the maximum photovoltaic power minus the maximum discharging power of the energy storage battery still does not meet a requirement for power supply for the load, the compensation power is provided by the alternating current grid. In this case, the direct current source provides the maximum photovoltaic power, and the energy storage battery discharges at the maximum discharging power. In addition, a corresponding compensation power is obtained from the alternating current grid, so as to meet the load power required for power supply for the load, thereby implementing fast power balancing and improving system efficiency.

In step S208, when the loop control instruction for the busbar voltage for charging of the energy storage battery is selected to be executed, the energy storage battery is in a charging state, the charging power of the energy storage battery is less than the maximum charging power, and the photovoltaic output power reaches the maximum photovoltaic power, where the charging power is equal to the maximum photovoltaic power minus the load power. With reference to step S204 and step S208, the charging power is calculated according to the following formulas (13) and (14).

$$P_{BAT\_CHARGE} = P_{PV} - P_{LOAD} \tag{13}$$

$$P_{PV} = P_{PV\_MPP} \tag{14}$$

$P_{BAT\_CHARGE}$ denotes the charging power, $P_{PV}$ denotes the photovoltaic output power, $P_{LOAD}$ denotes the load power, and $P_{PV\_MPP}$ denotes the maximum photovoltaic power. In this way, after the maximum photovoltaic power meets power supply for the load, the remaining power is used for charging of the energy storage battery. In this case, the charging power of the energy storage battery is controlled to preferably meet the load power required for power supply for the load, thereby implementing fast power balancing and improving system efficiency.

In step S208, when the loop control instruction for the busbar voltage for discharging of the energy storage battery is selected to be executed, the energy storage battery is in a discharging state, the discharging power of the energy storage battery is greater than the maximum discharging power, and the photovoltaic output power reaches the maximum photovoltaic power, where the discharging power is equal to the maximum photovoltaic power minus the load power. With reference to step S206 and step S208, the discharging power is calculated according to the following formulas (15) and (16).

$$P_{BAT\_DISCHARGE} = P_{PV} - P_{LOAD} \tag{15}$$

$$P_{PV} = P_{PV\_MPP} \tag{16}$$

$P_{BAT\_DISCHARGE}$ denotes the discharging power, $P_{PV}$ denotes the photovoltaic output power, $P_{LOAD}$ denotes the load power, and $P_{PV\_MPP}$ denotes the maximum photovoltaic power. In this way, when the maximum photovoltaic power cannot meet power supply for the load, the compensation power is provided by discharging of the energy storage battery. In this case, the discharging power of the energy storage battery is controlled to preferably meet the load power required for power supply for the load, thereby implementing fast power balancing and improving system efficiency.

It should be understood that the order of step S200, step S202, step S204, and step S206 may be adjusted or recombined. The order of the four steps is not limited in embodiments of this application. Step S200 to step S206 may be performed synchronously, or may be rearranged and combined in any order. This embodiment of this application and FIG. 2 describe step S200 to step S206 one by one only for ease of description.

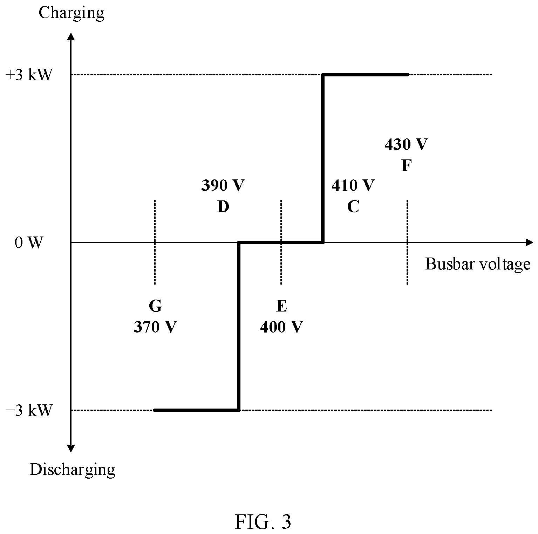

Refer to FIG. 3. FIG. 3 is a schematic diagram of controlling a busbar voltage of an inverter based on the method shown in FIG. 2 according to an embodiment of this application. As shown in FIG. 3, a Y-axis represents a charging/discharging power of an energy storage battery; a positive direction, that is, an upper half part of the Y-axis, represents the charging power; a negative direction, that is, a lower half part of the Y-axis represents the discharging power; and a maximum value of the charging/discharging power is 3 kW/-3 kW. An X-axis represents a corresponding busbar voltage and various voltage reference values. Specifically, a reference value of a busbar voltage on a BST side is denoted as F, which corresponds to 430 V and is also referred to as a first voltage interval; a reference value of a busbar voltage for charging of the energy storage battery is denoted as C, which corresponds to 410 V and is also referred to as a second voltage interval; a reference value of a busbar voltage for discharging of the energy storage battery is denoted as D, which corresponds to 390 V and is also referred to as a third voltage interval; and a reference value of a busbar voltage on an INV side is denoted as G, which corresponds to 370 V and is also referred to as a fourth voltage interval. A voltage interval is simplified as a single voltage value, and a difference between any two adjacent voltage values is 20 V, such that the intervals have clear definitions and limits. In addition, a median voltage is denoted as E, which corresponds to 400 V As shown in FIG. 3, the reference value of the busbar voltage on the BST side is greater than the reference value of the busbar voltage for charging of the energy storage battery, the reference value of the busbar voltage for charging of the energy storage battery is greater than the reference value of the busbar voltage for discharging of the energy storage battery, and the reference value of the busbar voltage for discharging of the energy storage battery is greater than the reference value of the busbar voltage on the INV side. In this way, with reference to FIG. 2 and FIG. 3, a correspondence between the busbar voltage and the charging/discharging power shown in FIG. 3 can be obtained by setting the voltage reference values. In this way, the energy storage battery has a stable charging power between C and F, and the energy storage battery has a stable discharging power between G and D. In addition, a related power is directly controlled, and the busbar voltage is stabilized at a reference voltage value, which implements a fast response to changes in a charging/discharging power of the energy storage battery, thereby improving conversion efficiency of the inverter, narrowing an operating range of the inverter, and further improving the efficiency of the inverter and increasing system revenue.

In some example embodiments, the maximum value of the charging/discharging power may be another value, such as 4 kW/-4 kW, or 5 kW/-5 kW. These can be adjusted and improved based on a specific application environment, which is not specifically limited herein.

In some example embodiments, the voltage reference values may be other values. These can be adjusted and improved based on a specific application environment, which is not specifically limited herein.

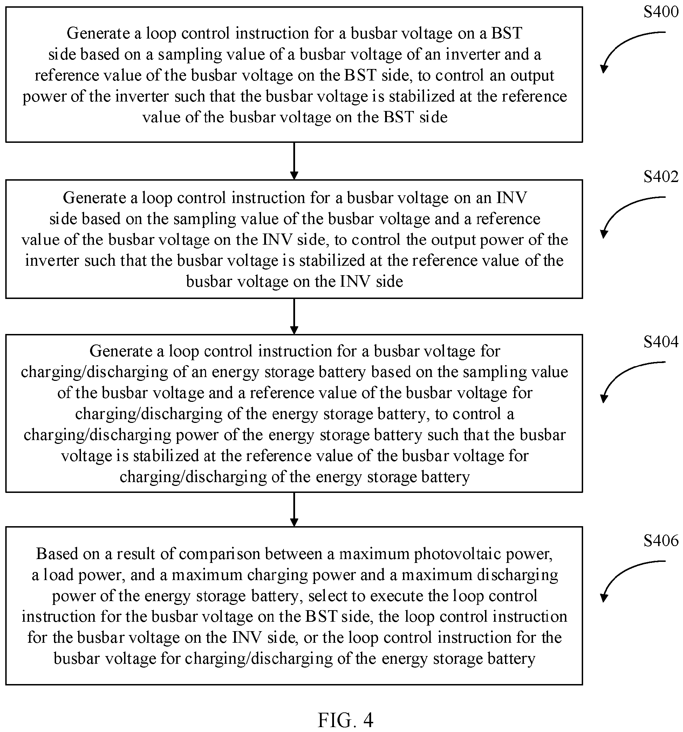

FIG. 4 is a schematic flowchart of a method for controlling a busbar voltage of an inverter according to a second implementation of an embodiment of this application. As shown in FIG. 4, the method for controlling includes the following steps.

Step S400: Generate a loop control instruction for a busbar voltage on a BST side based on a sampling value of the busbar voltage of the inverter and a reference value of the busbar voltage on the BST side, to control an output power of the inverter such that the busbar voltage is stabilized at the reference value of the busbar voltage on the BST side.

The inverter includes a DC/DC converter and a DC/AC converter. A direct current input side of the DC/AC converter is connected to a solar photovoltaic array, and a coupling point between a direct current output side of the DC/AC converter and a direct current input side of the DC/AC converter is a busbar. A busbar voltage is referred to as a busbar voltage for short, and a sampling value of a busbar voltage is referred to as a sampling value of a busbar voltage for short. The direct current input side of the DC/AC converter is connected to the solar photovoltaic array, to convert a direct current output from the solar photovoltaic array into an appropriate direct current to meet operating requirements of the DC/AC converter. In addition, a maximum power point tracking MPPT control strategy is performed for the direct current provided by the solar photovoltaic array to obtain a maximum photovoltaic power of the solar photovoltaic array. As an external energy storage device, an energy storage battery may be connected to the busbar of the inverter. In other words, the energy storage battery may be connected between the DC/DC converter and the DC/AC converter. It should be understood that the solar photovoltaic array may be any direct current source that can obtain a maximum power based on the MPPT control strategy. These can be adjusted and improved based on a specific application environment, which is not specifically limited herein.

For generation of the loop control instruction for the busbar voltage on the BST side, refer to step S200, and details are not described herein again.

Step S402: Generate a loop control instruction for a busbar voltage on an INV side based on the sampling value of the busbar voltage and a reference value of the busbar voltage on the INV side, to control the output power of the inverter such that the busbar voltage is stabilized at the reference value of the busbar voltage on the INV side.

For generation of the loop control instruction for the busbar voltage on the INV side, refer to step S202, and details are not described herein again.

Step S404: Generate a loop control instruction for a busbar voltage for charging/discharging of the energy storage battery based on the sampling value of the busbar voltage and a reference value of the busbar voltage for charging/discharging of the energy storage battery, to control a charging/discharging power of the energy storage battery such that the busbar voltage is stabilized at the reference value of the busbar voltage for charging/discharging of the energy storage battery.

The loop control instruction for the busbar voltage for charging/discharging of the energy storage battery may be generated in the form of a PI controller and according to the following formulas (17) and (18).

$$P_{BAT}(t) = K_P * e(t) + K_i * \int_0^t e(t) * dt \qquad (17)$$

$$e(t) = U_{REF\_BAT} - U_{BUS}(t) \qquad (18)$$

t denotes time, $U_{REF\_BAT}$ denotes the reference value of the busbar voltage for charging/discharging of the energy storage battery, which is also referred to as a reference value of a busbar voltage on the energy storage battery side, $U_{BUS}(t)$ denotes the sampling value of the busbar voltage, e(t) denotes a difference between the reference value of the busbar voltage for charging/discharging of the energy storage battery and the sampling value of the busbar voltage, $P_{BAT}(t)$ denotes a charging/discharging power of the energy storage battery under the loop control instruction for the busbar voltage for charging/discharging of the energy storage battery such that the busbar voltage is stabilized at the reference value $U_{REF\_EAT}$ of the busbar voltage for charging/discharging of the energy storage battery, $K_p$ denotes a proportional adjustment factor, and $K_i$ denotes an integral adjustment factor. It should be understood that the busbar voltage being stabilized at the reference value $U_{REF\_BAT}$ of the busbar voltage for charging/discharging of the energy storage battery means that jitters or ripples of the busbar voltage are less than a threshold, or that an average value or a root-mean-square value of the busbar voltage remains constant to some extent. The busbar voltage may be sampled by directly detecting and measuring a voltage using a sampling resistor, or by using another suitable technical means. In addition, the use of the PI controller can make the busbar voltage stabilized at the reference value $U_{REF\_BAT}$ of the busbar voltage for charging/discharging of the energy storage battery, which facilitates improving conversion efficiency of the inverter, narrowing an operating range of the inverter, and further improving efficiency of the inverter and increasing system revenue. It should be understood that in embodiments of this application, the controller is not necessarily a PI controller, and other controllers may also be used as required. It should be understood that in embodiments of this application, the controller is not necessarily a PI controller, and other controllers may also be used as required.

Step S406: Based on a result of comparison between a maximum photovoltaic power, a load power, and a maximum charging power and a maximum discharging power of the energy storage battery, select to execute the loop control instruction for the busbar voltage on the BST side, the loop control instruction for the busbar voltage on the INV side, or the loop control instruction for the busbar voltage for charging/discharging of the energy storage battery.

The maximum charging power of the energy storage battery is used to indicate a maximum value of the charging power of the energy storage battery when the energy storage battery is in a charging state, and the maximum discharging power of the energy storage battery is used to indicate a maximum value of the discharging power of the energy storage battery when the energy storage battery is in a discharging state. The maximum charging power and the maximum discharging power are preset, for example, preset based on an application scenario of the inverter, or preset based on a design limit or factory setting of the energy storage battery. The loop competitive strategy in step S406 may be implemented by a controller or a control circuit of the inverter. The loop control instructions mentioned above may also be generated by the controller. In this way, the control of the busbar voltage is determined based on a result of loop competition, and corresponding energy management is implemented. For example, an output power of the inverter or a charging/discharging power of the energy storage battery is controlled based on the result of the loop competition, and changes in the load power caused by an abrupt change in the load are taken into account. Therefore, fast power balancing in a scenario of an abrupt change in the load can be implemented. In addition, compared with a change in the busbar voltage and a limited response speed of the busbar capacitor, the loop competitive strategy directly controls a related power and stabilizes the busbar voltage near a reference voltage value based on a result of the loop competition, and therefore implements a fast response to changes in a charging/discharging power of the energy storage battery, thereby improving conversion efficiency of the inverter, narrowing an operating range of the inverter, and further improving the efficiency of the inverter and increasing system revenue.

Specifically, in step S406, the loop competitive strategy may be represented by making a series of determinations based on the maximum photovoltaic power, the load power, the maximum charging power, and the maximum discharging power to select the loop control instruction to be executed:

selecting to execute the loop control instruction for the busbar voltage on the BST side when the maximum photovoltaic power is greater than the load power, and the maximum photovoltaic power minus the load power is greater than the maximum charging power of the energy storage battery;
selecting to execute the loop control instruction for the busbar voltage on the INV side when the maximum photovoltaic power is less than the load power, and the maximum photovoltaic power minus the load power is less than the maximum discharging power of the energy storage battery; and
selecting to execute the loop control instruction for the busbar voltage for charging/discharging of the energy storage battery when the maximum photovoltaic power is less than the load power, and the maximum photovoltaic power minus the load power is greater than the maximum discharging power of the energy storage battery, or when the maximum photovoltaic power is greater than the load power, and the maximum photovoltaic power minus the load power is less than the maximum charging power of the energy storage battery.

In step S406, when the loop control instruction for the busbar voltage on the BST side is selected to be executed, related details are similar to those in step S208, and details are not described herein again. In step S406, when the loop control instruction for the busbar voltage on the INV side is selected to be executed, related details are similar to those in step S208, and details are not described herein again.

In step S406, when the loop control instruction for the busbar voltage for charging/discharging of the energy storage battery is selected to be executed, the direct current source provides the maximum photovoltaic power, and the maximum photovoltaic power minus the load power is less than the maximum charging power of the energy storage battery, and is greater than the maximum discharging power of the energy storage battery. With reference to steps S404 and S406, the charging/discharging power of the energy storage battery is an actual output power of the direct current source, that is, between the photovoltaic output power and the load power, and is a charging power or a discharging power depending on an actual situation. Under the loop control instruction for the busbar voltage for charging/discharging of the energy storage battery, the busbar voltage is stabilized at the reference value $U_{REF\_BAT}$ of the busbar voltage for charging/discharging of the energy storage battery, and the direct current source operates at the maximum photovoltaic power.

It should be understood that the order of step S400, step S402, and step S404 may be adjusted or recombined. The order of the three steps is not limited in embodiments of this application. Step S400 to step S404 may be performed synchronously, or may be rearranged and combined in any order. This embodiment of this application and FIG. 4 describe step S400 to step S404 one by one only for ease of description.

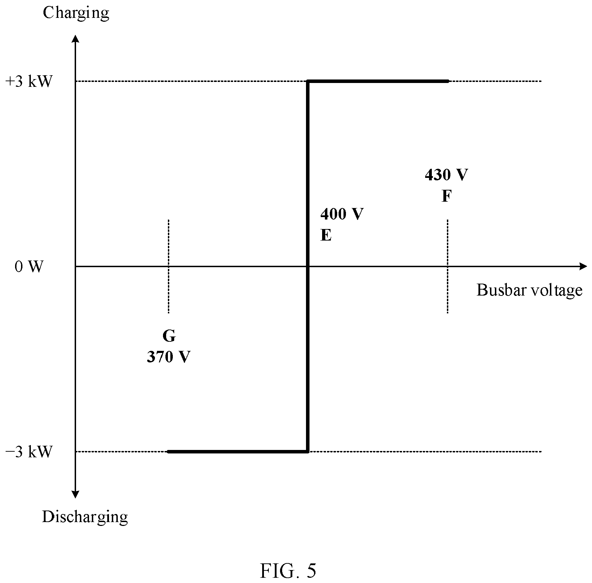

FIG. 5 is a schematic diagram of controlling a busbar voltage of an inverter based on the method shown in FIG. 4 according to an embodiment of this application. As shown in FIG. 5, a Y-axis represents a charging/discharging power of an energy storage battery; a positive direction, that is, an upper half part of the Y-axis, represents the charging power; a negative direction, that is, a lower half part of the Y-axis represents the discharging power; and a maximum value of the charging/discharging power is 3 kW/-3 kW. An X-axis represents a corresponding busbar voltage and various voltage reference values according to a first configuration. Specifically, a reference value of a busbar voltage on a BST side is denoted as F, which corresponds to 430 V and is also referred to as a fifth voltage interval; a reference value of a busbar voltage on an energy storage battery side is denoted as E, which corresponds to 400 V and is also referred to as a sixth voltage interval; and a reference value of a busbar voltage on an INV side is denoted as G, which corresponds to 370 V and is also referred to as a seventh voltage interval. The configuration in FIG. 5 shows that the reference value of the busbar voltage on the BST side is greater than the reference value of the busbar voltage on the energy storage battery side, and the reference value of the busbar voltage on the energy storage battery side is greater than the reference value of the busbar voltage on the INV side. In this way, with reference to FIG. 4 and FIG. 5, a correspondence between the busbar voltage and the charging/discharging power shown in FIG. 5 can be obtained by setting the voltage reference values. In addition, a related power is directly controlled, and the busbar voltage is stabilized near a reference voltage value, thereby improving conversion efficiency of the inverter, narrowing an operating range of the inverter, and further improving the efficiency of the inverter and increasing system revenue.

In some example embodiments, a maximum value of the charging/discharging power may be another value, such as 4 kW/-4 kW, or 5 kW/-5 kW. These can be adjusted and improved based on a specific application environment, which is not specifically limited herein.

In some example embodiments, the voltage reference values may be other values. These can be adjusted and improved based on a specific application environment, which is not specifically limited herein.

The specific embodiments provided in this application may be implemented by using any one of or a combination of hardware, software, firmware, or a solid-state logic circuit, and may be implemented in combination with signal processing, and a control and/or dedicated circuit. The device or apparatus provided in the specific embodiments of this application may include one or more processors (such as a microprocessor, a controller, a digital signal processor (DSP), an application-specific integrated circuit (ASIC), and a field-programmable gate array (FPGA)). These processors process various computer executable instructions to control an operation of the device or apparatus. The device or apparatus provided in the specific embodiments of this application may include a system bus or a data transmission system that couples various components together. The system bus may include any one of or a combination of different bus structures, such as a memory bus or a memory controller, a peripheral bus, a universal serial bus, and/or a processor or a local bus utilizing any one of the plurality of bus architectures. The device or apparatus provided in the specific embodiments of this application may be provided separately, may be a part of a system, or may be a part of another device or apparatus.

Embodiments provided in this application may include or may be combined with a computer-readable storage medium, for example, one or more storage devices capable of providing non-transitory data storage. The computer-readable storage medium/storage device may be configured to store data, programmers, and/or instructions that, when executed by a processor of the device or apparatus provided in embodiments of this application, cause the device or apparatus to perform the related operations. The computer-readable storage medium/storage device may include one or more of the following characteristics: volatile, non-volatile, dynamic, static, readable/writable, read-only, random access, sequential access, location addressability, file addressability, and content addressability. In one or more example embodiments, the computer-readable storage medium/storage device may be integrated into the device or apparatus provided in the specific embodiments of this application, or belong to a common system. The computer-readable storage medium/storage device may include an optical storage device, and a semiconductor storage device and/or a magnetic storage device, and may include a random access memory (RAM), a flash memory, a read-only memory (ROM), an erasable programmable read-only memory (EPROM), an electrically erasable programmable read-only memory (EEPROM), a register, a hard disk, a removable hard disk, a recordable and/or rewritable compact disc (CD), a digital versatile disc (DVD), and a high-capacity medium storage device or any other forms of suitable storage media.

Described above are implementations of embodiments of this application. It should be noted that the steps of the method described in the specific embodiments of this application may be subject to sequence adjustment, combination, and deletion based on an actual requirement. In the foregoing embodiments, the descriptions of embodiments have respective focuses. For a part that is not described in detail in an embodiment, refer to the related description in the other embodiments. It may be understood that the structures shown in embodiments of this application and the accompanying drawings do not constitute specific limitations on the related apparatus or system. In some other embodiments of this application, the related apparatus or system may include more or fewer components than those shown in the specific embodiments and the accompanying drawings, or some components may be combined, or some components may be split, or different component arrangements may be used. Persons skilled in the art should understand that various modifications or changes may be made to the arrangements, operations, and details of the methods and devices recorded in the specific embodiments without departing from the spirit and scope of the specific embodiments of this application; and several improvements and refinements may further be made without departing from the principle of embodiments of this application, and these improvements and refinements shall also be construed to be within the scope of protection of this application.

**Claims**

1.  A method for controlling a busbar voltage of a photovoltaic system, the photovoltaic system comprising a DC/DC converter and a DC/AC converter, wherein the DC/DC converter, the DC/AC converter, and an energy storage battery are connected via a busbar, the DC/DC converter is connected to a photovoltaic direct current source and performs maximum power point tracking MPPT on an input power from the photovoltaic direct current source, a load connected to the DC/AC converter has a load power, and the energy storage battery has a maximum charging power and a maximum discharging power; and the method comprises:

controlling the busbar voltage to be in a plurality of different discontinuous voltage intervals based on different results of comparison between a maximum photovoltaic power and the load power, the maximum charging power, and the maximum discharging power, wherein
the plurality of different discontinuous voltage intervals correspond to different operating states of the inverter.

2. The method according to claim 1, wherein controlling the busbar voltage to be in the plurality of different discontinuous voltage intervals based on the different results of comparison between the maximum photovoltaic power and the load power, the maximum charging power, and the maximum discharging power comprises:

controlling the busbar voltage to operate in a first voltage interval when the maximum photovoltaic power is greater than the load power, and the maximum photovoltaic power minus the load power is greater than the maximum charging power, wherein
the first voltage interval corresponds to a reference value of a busbar voltage on a BST side, and
when an operating state of the inverter is a state corresponding to the reference value of the busbar voltage on the BST side, the energy storage battery is in a charging state, a charging power of the energy storage battery reaches the maximum charging power, and a photovoltaic output power of the photovoltaic direct current source is less than the maximum photovoltaic power, wherein the photovoltaic output power of the photovoltaic direct current source is equal to a sum of the load power and the maximum charging power.

3. The method according to claim 1, wherein controlling the busbar voltage to be in the plurality of different discontinuous voltage intervals based on the different results of comparison between the maximum photovoltaic power and the load power, the maximum charging power, and the maximum discharging power comprises:

controlling the busbar voltage to operate in a second voltage interval when the maximum photovoltaic power is greater than the load power, and the maximum photovoltaic power minus the load power is less than the maximum charging power, wherein
the second voltage interval corresponds to a reference value of a busbar voltage for charging of the energy storage battery, and
when an operating state of the inverter is a state corresponding to the reference value of the busbar voltage for charging of the energy storage battery, the energy storage battery is in a charging state, a charging power of the energy storage battery is less than the maximum charging power, and a photovoltaic output power provided by the photovoltaic direct current source reaches the maximum photovoltaic power, wherein the charging power of the energy storage battery is equal to the maximum photovoltaic power minus the load power.

4. The method according to claim 1, wherein controlling the busbar voltage to be in the plurality of different discontinuous voltage intervals based on the different results of comparison between the maximum photovoltaic power and the load power, the maximum charging power, and the maximum discharging power comprises:

controlling the busbar voltage to operate in a third voltage interval when the maximum photovoltaic power is less than the load power, and the maximum photovoltaic power minus the load power is less than the maximum discharging power, wherein
the third voltage interval corresponds to a reference value of a busbar voltage on an INV side, and
when an operating state of the inverter is a state corresponding to the reference value of the busbar voltage on the INV side, the energy storage battery is in a discharging state, a discharging power of the energy storage battery reaches the maximum discharging power, a photovoltaic output power provided by the photovoltaic direct current source reaches the maximum photovoltaic power, and the load obtains a compensation power from an alternating current grid, wherein the compensation power is equal to the load power minus the maximum photovoltaic power plus the maximum discharging power.

5. The method according to claim 1, wherein controlling the busbar voltage to be in the plurality of different discontinuous voltage intervals based on the different results of comparison between the maximum photovoltaic power and the load power, the maximum charging power, and the maximum discharging power comprises:

controlling the busbar voltage to operate in a fourth voltage interval when the maximum photovoltaic power is less than the load power, and the maximum photovoltaic power minus the load power is greater than the maximum discharging power, wherein

the fourth voltage interval corresponds to a reference value of a busbar voltage for discharging of the energy storage battery, and

when an operating state of the inverter is a state corresponding to the reference value of the busbar voltage for discharging of the energy storage battery, the energy storage battery is in a discharging state, a discharging power of the energy storage battery is greater than the maximum discharging power, and a photovoltaic output power provided by the photovoltaic direct current source reaches the maximum photovoltaic power, wherein the discharging power of the energy storage battery is equal to the maximum photovoltaic power minus the load power.

6. The method according to claim 1, wherein controlling the busbar voltage to be in the plurality of different discontinuous voltage intervals based on the different results of comparison between the maximum photovoltaic power and the load power, the maximum charging power, and the maximum discharging power comprises:

controlling the busbar voltage to operate in a first voltage interval when the maximum photovoltaic power is greater than the load power, and the maximum photovoltaic power minus the load power is greater than the maximum charging power, wherein the first voltage interval corresponds to a reference value of a busbar voltage on a BST side,

controlling the busbar voltage to operate in a second voltage interval when the maximum photovoltaic power is greater than the load power, and the maximum photovoltaic power minus the load power is less than the maximum charging power, wherein the second voltage interval corresponds to a reference value of a busbar voltage for charging of the energy storage battery,

controlling the busbar voltage to operate in a third voltage interval when the maximum photovoltaic power is less than the load power, and the maximum photovoltaic power minus the load power is less than the maximum discharging power, wherein the third voltage interval corresponds to a reference value of a busbar voltage on an INV side, or

controlling the busbar voltage to operate in a fourth voltage interval when the maximum photovoltaic power is less than the load power, and the maximum photovoltaic power minus the load power is greater than the maximum discharging power, wherein the fourth voltage interval corresponds to a reference value of a busbar voltage for discharging of the energy storage battery, wherein

the reference value of the busbar voltage on the BST side is greater than the reference value of the busbar voltage for charging of the energy storage battery, the reference value of the busbar voltage for charging of the energy storage battery is greater than the reference value of the busbar voltage for discharging of the energy storage battery, and the reference value of the busbar voltage for discharging of the energy storage battery is greater than the reference value of the busbar voltage on the INV side.

7. The method according to claim 6, wherein the method further comprises:

generating a loop control instruction for the busbar voltage on the BST side based on a sampling value of the busbar voltage of the inverter and the reference value of the busbar voltage on the BST side, to control an output power of the inverter such that the busbar voltage is stabilized at the reference value of the busbar voltage on the BST side;

generating a loop control instruction for the busbar voltage on the INV side based on the sampling value of the busbar voltage and the reference value of the busbar voltage on the INV side, to control the output power of the inverter such that the busbar voltage is stabilized at the reference value of the busbar voltage on the INV side;

generating a loop control instruction for the busbar voltage for charging of the energy storage battery based on the sampling value of the busbar voltage and the reference value of the busbar voltage for charging of the energy storage battery, to control a charging power of the energy storage battery such that the busbar voltage is stabilized at the reference value of the busbar voltage for charging of the energy storage battery; and

generating a loop control instruction for the busbar voltage for discharging of the energy storage battery based on the sampling value of the busbar voltage and the reference value of the busbar voltage for discharging of the energy storage battery, to control a discharging power of the energy storage battery such that the busbar voltage is stabilized at the reference value of the busbar voltage for discharging of the energy storage battery.

8. The method according to claim 7, wherein the loop control instruction for the busbar voltage on the BST side, the loop control instruction for the busbar voltage on the INV side, the loop control instruction for the busbar voltage for charging of the energy storage battery, and the loop control instruction for the busbar voltage for discharging of the energy storage battery all use a PI controller.

9. The method according to claim 1, wherein controlling the busbar voltage to be in the plurality of different discontinuous voltage intervals based on the different results of comparison between the maximum photovoltaic power and the load power, the maximum charging power, and the maximum discharging power comprises:

controlling the busbar voltage to operate in a fifth voltage interval when the maximum photovoltaic power is less than the load power, and the maximum photovoltaic power minus the load power is greater than the maximum discharging power, or when the maximum photovoltaic power is greater than the load power, and the maximum photovoltaic power minus the load power is less than the maximum charging power, wherein
the fifth voltage interval corresponds to a reference value of a busbar voltage for charging/discharging of the energy storage battery, and
when an operating state of the inverter is a state corresponding to the reference value of the busbar voltage for charging/discharging of the energy storage battery, a photovoltaic output power provided by the photovoltaic direct current source reaches the maximum photovoltaic power, and the maximum photovoltaic power minus the load power is less than the maximum charging power and greater than the maximum discharging power.

10. The method according to claim 1, wherein controlling the busbar voltage to be in the plurality of different discontinuous voltage intervals based on the different results of comparison between the maximum photovoltaic power and the load power, the maximum charging power, and the maximum discharging power comprises:

controlling the busbar voltage to operate in a first voltage interval when the maximum photovoltaic power is greater than the load power, and the maximum photovoltaic power minus the load power is greater than the maximum charging power, wherein the first voltage interval corresponds to a reference value of a busbar voltage on a BST side,
controlling the busbar voltage to operate in a third voltage interval when the maximum photovoltaic power is less than the load power, and the maximum photovoltaic power minus the load power is less than the maximum discharging power, wherein the third voltage interval corresponds to a reference value of a busbar voltage on an INV side, or
controlling the busbar voltage to operate in a fifth voltage interval when the maximum photovoltaic power is less than the load power, and the maximum photovoltaic power minus the load power is greater than the maximum discharging power, or when the maximum photovoltaic power is greater than the load power, and the maximum photovoltaic power minus the load power is less than the maximum charging power, wherein the fifth voltage interval corresponds to a reference value of a busbar voltage for charging/discharging of the energy storage battery, and
the reference value of the busbar voltage on the BST side is greater than the reference value of the busbar voltage for charging/discharging of the energy storage battery, and the reference value of the busbar voltage for charging/discharging of the energy storage battery is greater than the reference value of the busbar voltage on the INV side.

11. The method according to claim 10, wherein the method further comprises:

generating a loop control instruction for the busbar voltage on the BST side based on a sampling value of the busbar voltage of the inverter and the reference value of the busbar voltage on the BST side, to control an output power of the inverter such that the busbar voltage is stabilized at the reference value of the busbar voltage on the BST side;
generating a loop control instruction for the busbar voltage on the INV side based on the sampling value of the busbar voltage and the reference value of the busbar voltage on the INV side, to control the output power of the inverter such that the busbar voltage is stabilized at the reference value of the busbar voltage on the INV side; and
generating a loop control instruction for the busbar voltage for charging/discharging of the energy storage battery based on the sampling value of the busbar voltage and the reference value of the busbar voltage for charging/discharging of the energy storage battery, to control a charging/discharging power of the energy storage battery such that the busbar voltage is stabilized at the reference value of the busbar voltage for charging/discharging of the energy storage battery.

12. The method according to claim 11, wherein the loop control instruction for the busbar voltage on the BST side, the loop control instruction for the busbar voltage on the INV side, and the loop control instruction for the busbar voltage for charging/discharging of the energy storage battery all use a PI controller.

13. The method according to any one of claims 1 to 12, wherein the maximum charging power and the maximum discharging power are preset.

14. A photovoltaic system, comprising:

a DC/DC converter;
a DC/AC converter, wherein the DC/DC converter, the DC/AC converter, and an energy storage battery are connected via a busbar, the DC/DC converter is connected to a photovoltaic direct current source and performs maximum power point tracking MPPT on an input power from the photovoltaic direct current source, a load connected to the DC/AC converter has a load power, and the energy storage battery has a maximum charging power and a maximum discharging power; and
a busbar voltage controller, configured to:

control the busbar voltage to be in a plurality of different discontinuous voltage intervals based on different results of comparison between a maximum photovoltaic power and the load power, the maximum charging power, and the maximum discharging power, wherein
the plurality of different discontinuous voltage intervals correspond to different operating states of the inverter.

15. The photovoltaic system according to claim 14, wherein controlling the busbar voltage to be in the plurality of different discontinuous voltage intervals based on the different results of comparison between the maximum photovoltaic power and the load power, the maximum charging power, and the maximum discharging power comprises:

controlling the busbar voltage to operate in a first voltage interval when the maximum photovoltaic power is greater than the load power, and the maximum photovoltaic power minus the load power is greater than the maximum charging power, wherein
the first voltage interval corresponds to a reference value of a busbar voltage on a BST side, and
when an operating state of the inverter is a state corresponding to the reference value of the busbar voltage on the BST side, the energy storage battery is in a charging state, a charging power of the energy storage battery reaches the maximum charging power, and a photovoltaic output power of the photovoltaic direct current source is less than the maximum photovoltaic power, wherein the photovoltaic output power of the photovoltaic direct current source is equal to a sum of the load power and the maximum charging power.

16. The photovoltaic system according to claim 14, wherein controlling the busbar voltage to be in the plurality of different discontinuous voltage intervals based on the different results of comparison between the maximum photovoltaic power and the load power, the maximum charging power, and the maximum discharging power comprises:

controlling the busbar voltage to operate in a second voltage interval when the maximum photovoltaic power is greater than the load power, and the maximum photovoltaic power minus the load power is less than the maximum charging power, wherein
the second voltage interval corresponds to a reference value of a busbar voltage for charging of the energy storage battery, and
when an operating state of the inverter is a state corresponding to the reference value of the busbar voltage for charging of the energy storage battery, the energy storage battery is in a charging state, a charging power of the energy storage battery is less than the maximum charging power, and a photovoltaic output power provided by the photovoltaic direct current source reaches the maximum photovoltaic power, wherein the charging power of the energy storage battery is equal to the maximum photovoltaic power minus the load power.

17. The photovoltaic system according to claim 14, wherein controlling the busbar voltage to be in the plurality of different discontinuous voltage intervals based on the different results of comparison between the maximum photovoltaic power and the load power, the maximum charging power, and the maximum discharging power comprises:

controlling the busbar voltage to operate in a third voltage interval when the maximum photovoltaic power is less than the load power, and the maximum photovoltaic power minus the load power is less than the maximum discharging power, wherein
the third voltage interval corresponds to a reference value of a busbar voltage on an INV side, and
when an operating state of the inverter is a state corresponding to the reference value of the busbar voltage on the INV side, the energy storage battery is in a discharging state, a discharging power of the energy storage battery reaches the maximum discharging power, a photovoltaic output power provided by the photovoltaic direct current source reaches the maximum photovoltaic power, and the load obtains a compensation power from an alternating current grid, wherein the compensation power is equal to the load power minus the maximum photovoltaic power plus the maximum discharging power.

18. The photovoltaic system according to claim 14, wherein controlling the busbar voltage to be in the plurality of different discontinuous voltage intervals based on the different results of comparison between the maximum photovoltaic power and the load power, the maximum charging power, and the maximum discharging power comprises:

controlling the busbar voltage to operate in a fourth voltage interval when the maximum photovoltaic power is less than the load power, and the maximum photovoltaic power minus the load power is greater than the maximum discharging power, wherein
the fourth voltage interval corresponds to a reference value of a busbar voltage for discharging of the energy storage battery, and
when an operating state of the inverter is a state corresponding to the reference value of the busbar voltage for discharging of the energy storage battery, the energy storage battery is in a discharging state, a discharging power of the energy storage battery is greater than the maximum discharging power, and a photovoltaic output power provided by the photovoltaic direct current source reaches the maximum photovoltaic power, wherein the discharging power of the energy storage battery is equal to the maximum photovoltaic power minus the load power.

19. The photovoltaic system according to claim 14, wherein controlling the busbar voltage to be in the plurality of different discontinuous voltage intervals based on the different results of comparison between the maximum photovoltaic power and the load power, the maximum charging power, and the maximum discharging power comprises:

controlling the busbar voltage to operate in a first voltage interval when the maximum photovoltaic power is greater than the load power, and the maximum photovoltaic power minus the load power is greater than the maximum charging power, wherein the first voltage interval corresponds to a reference value of a busbar voltage on a BST side,
controlling the busbar voltage to operate in a second voltage interval when the maximum photovoltaic power is greater than the load power, and the maximum photovoltaic power minus the load power is less than the maximum charging power, wherein the second voltage interval corresponds to a reference value of a busbar voltage for charging of the energy storage battery,
controlling the busbar voltage to operate in a third voltage interval when the maximum photovoltaic power is less than the load power, and the maximum photovoltaic power minus the load power is less than the maximum discharging power, wherein the third voltage interval corresponds to a reference value of a busbar voltage on an INV side, or
controlling the busbar voltage to operate in a fourth voltage interval when the maximum photovoltaic power is less than the load power, and the maximum photovoltaic power minus the load power is greater than the maximum discharging power, wherein the fourth voltage interval corresponds to a reference value of a busbar voltage for discharging of the energy storage battery, wherein
the reference value of the busbar voltage on the BST side is greater than the reference value of the busbar voltage for charging of the energy storage battery, the reference value of the busbar voltage for charging of the energy storage battery is greater than the reference value of the busbar voltage for discharging of the energy storage battery, and the reference value of the busbar voltage for discharging of the energy storage battery is greater than the reference value of the busbar voltage on the INV side.

20. The photovoltaic system according to claim 19, wherein the busbar voltage controller is further configured to:

generate a loop control instruction for the busbar voltage on the B ST side based on a sampling value of the busbar voltage of the inverter and the reference value of the busbar voltage on the BST side, to control an output power of the inverter such that the busbar voltage is stabilized at the reference value of the busbar voltage on the BST side;
generate a loop control instruction for the busbar voltage on the INV side based on the sampling value of the busbar voltage and the reference value of the busbar voltage on the INV side, to control the output power of the inverter such that the busbar voltage is stabilized at the reference value of the busbar voltage on the INV side;
generate a loop control instruction for the busbar voltage for charging of the energy storage battery based on the sampling value of the busbar voltage and the reference value of the busbar voltage for charging of the energy storage battery, to control a charging power of the energy storage battery such that the busbar voltage is stabilized at the reference value of the busbar voltage for charging of the energy storage battery; and generate a loop control instruction for the busbar voltage for discharging of the energy storage battery based on the sampling value of the busbar voltage and the reference value of the busbar voltage for discharging of the energy storage battery, to control a discharging power of the energy storage battery such that the busbar voltage is stabilized at the reference value of the busbar voltage for discharging of the energy storage battery.

21. The photovoltaic system according to claim 20, wherein the loop control instruction for the busbar voltage on the BST side, the loop control instruction for the busbar voltage on the INV side, the loop control instruction for the busbar voltage for charging of the energy storage battery, and the loop control instruction for the busbar voltage for discharging of the energy storage battery all use a PI controller.

22. The photovoltaic system according to claim 14, wherein controlling the busbar voltage to be in the plurality of different discontinuous voltage intervals based on the different results of comparison between the maximum photovoltaic power and the load power, the maximum charging power, and the maximum discharging power comprises:

controlling the busbar voltage to operate in a fifth voltage interval when the maximum photovoltaic power is less than the load power, and the maximum photovoltaic power minus the load power is greater than the maximum discharging power, or when the maximum photovoltaic power is greater than the load power, and the maximum photovoltaic power minus the load power is less than the maximum charging power, wherein
the fifth voltage interval corresponds to a reference value of a busbar voltage for charging/discharging of the energy storage battery, and
when an operating state of the inverter is a state corresponding to the reference value of the busbar voltage for charging/discharging of the energy storage battery, a photovoltaic output power provided by the photovoltaic direct current source reaches the maximum photovoltaic power, and the maximum photovoltaic power minus the load power is less than the maximum charging power and greater than the maximum discharging power.

23. The photovoltaic system according to claim 14, wherein controlling the busbar voltage to be in the plurality of different discontinuous voltage intervals based on the different results of comparison between the maximum photovoltaic power and the load power, the maximum charging power, and the maximum discharging power comprises:

controlling the busbar voltage to operate in a first voltage interval when the maximum photovoltaic power is greater than the load power, and the maximum photovoltaic power minus the load power is greater than the maximum charging power, wherein the first voltage interval corresponds to a reference value of a busbar voltage on a BST side,
controlling the busbar voltage to operate in a third voltage interval when the maximum photovoltaic power is less than the load power, and the maximum photovoltaic power minus the load power is less than the maximum discharging power, wherein the third voltage interval corresponds to a reference value of a busbar voltage on an INV side, or
controlling the busbar voltage to operate in a fifth voltage interval when the maximum photovoltaic power is less than the load power, and the maximum photovoltaic power minus the load power is greater than the maximum discharging power, or when the maximum photovoltaic power is greater than the load power, and the maximum photovoltaic power minus the load power is less than the maximum charging power, wherein the fifth voltage interval corresponds to a reference value of a busbar voltage for charging/discharging of the energy storage battery, and
the reference value of the busbar voltage on the BST side is greater than the reference value of the busbar voltage for charging/discharging of the energy storage battery, and the reference value of the busbar voltage for charging/discharging of the energy storage battery is greater than the reference value of the busbar voltage on the INV side.

24. The photovoltaic system according to claim 23, wherein the busbar voltage controller is further configured to:

generate a loop control instruction for the busbar voltage on the B ST side based on a sampling value of the busbar voltage of the inverter and the reference value of the busbar voltage on the BST side, to control an output power of the inverter such that the busbar voltage is stabilized at the reference value of the busbar voltage on the BST side;
generate a loop control instruction for the busbar voltage on the INV side based on the sampling value of the busbar voltage and the reference value of the busbar voltage on the INV side, to control the output power of the inverter such that the busbar voltage is stabilized at the reference value of the busbar voltage on the INV side; and

generate a loop control instruction for the busbar voltage for charging/discharging of the energy storage battery based on the sampling value of the busbar voltage and the reference value of the busbar voltage for charging/discharging of the energy storage battery, to control a charging/discharging power of the energy storage battery such that the busbar voltage is stabilized at the reference value of the busbar voltage for charging/discharging of the energy storage battery.

25. The photovoltaic system according to claim 24, wherein the loop control instruction for the busbar voltage on the BST side, the loop control instruction for the busbar voltage on the INV side, and the loop control instruction for the busbar voltage for charging/discharging of the energy storage battery all use a PI controller.

26. The photovoltaic system according to any one of claims 14 to 25, wherein the maximum charging power and the maximum discharging power are preset.

FIG. 1

S200

Generate a loop control instruction for a busbar voltage on a BST side based on a sampling value of a busbar voltage of an inverter and a reference value of the busbar voltage on the BST side, to control an output power of the inverter such that the busbar voltage is stabilized at the reference value of the busbar voltage on the BST side

S202

Generate a loop control instruction for a busbar voltage on an INV side based on the sampling value of the busbar voltage and a reference value of the busbar voltage on the INV side, to control the output power of the inverter such that the busbar voltage is stabilized at the reference value of the busbar voltage on the INV side

S204

Generate a loop control instruction for a busbar voltage for charging of an energy storage battery based on the sampling value of the busbar voltage and a reference value of the busbar voltage for charging of the energy storage battery, to control a charging power of the energy storage battery such that the busbar voltage is stabilized at the reference value of the busbar voltage for charging of the energy storage battery

S206

Generate a loop control instruction for a busbar voltage for discharging of the energy storage battery based on the sampling value of the busbar voltage and a reference value of the busbar voltage for discharging of the energy storage battery, to control a discharging power of the energy storage battery such that the busbar voltage is stabilized at the reference value of the busbar voltage for discharging of the energy storage battery

S208

Based on a result of comparison between a maximum photovoltaic power a load power, and a maximum charging power and a maximum discharging power of the energy storage battery, select to execute the loop control instruction for the busbar voltage on the BST side, the loop control instruction for the busbar voltage on the INV side, the loop control instruction for the busbar voltage for charging of the energy storage battery, or the loop control instruction for the busbar voltage for discharging of the energy storage battery.

FIG. 2

FIG. 3

Generate a loop control instruction for a busbar voltage on a BST side based on a sampling value of a busbar voltage of an inverter and a reference value of the busbar voltage on the BST side, to control an output power of the inverter such that the busbar voltage is stabilized at the reference value of the busbar voltage on the BST side

S400

Generate a loop control instruction for a busbar voltage on an INV side based on the sampling value of the busbar voltage and a reference value of the busbar voltage on the INV side, to control the output power of the inverter such that the busbar voltage is stabilized at the reference value of the busbar voltage on the INV side

S402

Generate a loop control instruction for a busbar voltage for charging/discharging of an energy storage battery based on the sampling value of the busbar voltage and a reference value of the busbar voltage for charging/discharging of the energy storage battery, to control a charging/discharging power of the energy storage battery such that the busbar voltage is stabilized at the reference value of the busbar voltage for charging/discharging of the energy storage battery

S404

Based on a result of comparison between a maximum photovoltaic power, a load power, and a maximum charging power and a maximum discharging power of the energy storage battery, select to execute the loop control instruction for the busbar voltage on the BST side, the loop control instruction for the busbar voltage on the INV side, or the loop control instruction for the busbar voltage for charging/discharging of the energy storage battery

S406

FIG. 4

FIG. 5

## INTERNATIONAL SEARCH REPORT

| International application No. |
| --- |
| **PCT/CN2020/124781** |

**A. CLASSIFICATION OF SUBJECT MATTER**

H02J 3/38(2006.01)i

According to International Patent Classification (IPC) or to both national classification and IPC

**B. FIELDS SEARCHED**

Minimum documentation searched (classification system followed by classification symbols)

H02J

Documentation searched other than minimum documentation to the extent that such documents are included in the fields searched

Electronic data base consulted during the international search (name of data base and, where practicable, search terms used)

CNKI, CNPAT, WPI, EPODOC: 光伏, 太阳能, 母线, 电压, 功率, 储能, 蓄能, 电池, 充电, 放电, 负载, DCDC, DCAC, 逆变, solar, photovoltaic, bus, voltage, power, power storage, battery, charg+, discharg+, load, invert+

**C. DOCUMENTS CONSIDERED TO BE RELEVANT**

| Category* | Citation of document, with indication, where appropriate, of the relevant passages | Relevant to claim No. |
| --- | --- | --- |
| A | CN 111293717 A (SUNGROW POWER SUPPLY CO., LTD.) 16 June 2020 (2020-06-16) description, paragraphs [0040]-[0082], and figures 1-8 | 1-26 |
| A | CN 109617041 A (SOUTHWEST JIAOTONG UNIVERSITY) 12 April 2019 (2019-04-12) entire document | 1-26 |
| A | CN 110661299 A (KEHUA HENGSHENG CO., LTD. et al.) 07 January 2020 (2020-01-07) entire document | 1-26 |
| A | CN 103390900 A (SHANGHAI UNIVERSITY OF ELECTRIC POWER) 13 November 2013 (2013-11-13) entire document | 1-26 |
| A | US 2017018933 A1 (KING FAHD UNIVERSITY OF PETROLEUM AND MINERALS et al.) 19 January 2017 (2017-01-19) entire document | 1-26 |

☑ Further documents are listed in the continuation of Box C.   ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **15 July 2021** | **02 August 2021** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| | International application No. |
|---|---|
| | **PCT/CN2020/124781** |

**C.    DOCUMENTS CONSIDERED TO BE RELEVANT**

| Category* | Citation of document, with indication, where appropriate, of the relevant passages | Relevant to claim No. |
|---|---|---|
| A | 杨旭 (YANG, Xu). "光储发电系统三端口DC/DC变换器硬解耦与控制方法研究 (Research on Hardware-decoupling And Control Method of Three-port DC/DC Converter for PV-storage Generation System)" 中国优秀硕士学位论文全文数据库 (Chinese Master's Theses Full-Text Database), 15 February 2017 (2017-02-15), ISSN: 1674-0246, pp. 39-46 | 1-26 |

<div style="text-align:center">

**INTERNATIONAL SEARCH REPORT**
Information on patent family members

</div>

International application No.

**PCT/CN2020/124781**

| Patent document cited in search report | | | Publication date (day/month/year) | Patent family member(s) | | | Publication date (day/month/year) |
|---|---|---|---|---|---|---|---|
| CN | 111293717 | A | 16 June 2020 | None | | | |
| CN | 109617041 | A | 12 April 2019 | None | | | |
| CN | 110661299 | A | 07 January 2020 | None | | | |
| CN | 103390900 | A | 13 November 2013 | None | | | |
| US | 2017018933 | A1 | 19 January 2017 | US | 2015188415 | A1 | 02 July 2015 |
| | | | | US | 2017070054 | A1 | 09 March 2017 |
| | | | | US | 9461535 | B2 | 04 October 2016 |
| | | | | US | 9985439 | B2 | 29 May 2018 |
| | | | | US | 9590425 | B2 | 07 March 2017 |

Form PCT/ISA/210 (patent family annex) (January 2015)